(19) Europäisches Patentamt
European Patent Office
Office européen des brevets

(11) EP 4 700 086 A1

(12) **EUROPEAN PATENT APPLICATION**
published in accordance with Art. 153(4) EPC

(43) Date of publication:
**25.02.2026 Bulletin 2026/09**

(21) Application number: **24882600.0**

(22) Date of filing: **05.08.2024**

(51) International Patent Classification (IPC):
***C08L 51/04*** *(2006.01)* ***C08L 25/12*** *(2006.01)*
***C08K 5/10*** *(2006.01)* ***C08K 5/053*** *(2006.01)*

(52) Cooperative Patent Classification (CPC):
**C08K 5/053; C08K 5/10; C08L 25/12; C08L 51/04**

(86) International application number:
**PCT/KR2024/011519**

(87) International publication number:
**WO 2025/089571 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.10.2023 KR 20230143765**

(71) Applicant: **LG CHEM, LTD.**
**Seoul 07336 (KR)**

(72) Inventors:
- **PARK, Chun Ho**
**Daejeon 34122 (KR)**
- **KIM, Seo Hwa**
**Daejeon 34122 (KR)**
- **CHO, Yun Kyoung**
**Daejeon 34122 (KR)**
- **AN, Yong Hee**
**Daejeon 34122 (KR)**
- **KIM, Ho Hoon**
**Daejeon 34122 (KR)**
- **JANG, Jeongmin**
**Daejeon 34122 (KR)**
- **HWANG, Hyeri**
**Daejeon 34122 (KR)**

(74) Representative: **Plasseraud IP**
**104 Rue de Richelieu**
**CS92104**
**75080 Paris Cedex 02 (FR)**

(54) **THERMOPLASTIC RESIN COMPOSITION, PREPARATION METHOD THEREFOR, AND MOLDED ARTICLE INCLUDING SAME**

(57) Disclosed are a thermoplastic resin composition, a method of preparing the same and a molded article including the same. More particularly, provided are a thermoplastic resin composition including 100 parts by weight of a base resin including 25 to 75 % by weight of one or more copolymers (A) selected from the group consisting of a copolymer (a-1) including an alkyl acrylate rubber having an average particle diameter of 50 to 150 nm, an aromatic vinyl compound and a vinyl cyanide compound, a copolymer (a-2) including an alkyl acrylate rubber having an average particle diameter of greater than 150 nm and 600 nm or less, an aromatic vinyl compound and a vinyl cyanide compound, and a copolymer (a-3) including an alkyl acrylate rubber having an average particle diameter of 50 nm to 120 nm, an aromatic vinyl compound and a vinyl cyanide compound, and 25 to 75 % by weight of one or more matrix resins (B) selected from the group consisting of an aromatic vinyl compound-vinyl cyanide compound copolymer (b-1) and a (meth) acrylic acid alkyl ester polymer (b-2); and (C) 0.3 to 2 parts by weight of a pentaerythritol-based lubricant, wherein the graft copolymer (a-3) has an alkyl acrylate coverage (X) value of 65 % by weight or more as calculated by Equation 1 below, a method of preparing the thermoplastic resin composition and a molded article including the thermoplastic resin composition.

In accordance with the present invention, provided are a thermoplastic resin composition having processability equivalent to or higher than that of a conventional material, PVC resin, for calender processing and having excellent surface quality without flow marks, bubbles, and plate out, and capable of being calendered using existing calendering equipment, a method of preparing the thermoplastic resin composition and a molded article including the thermoplastic resin composition.

EP 4 700 086 A1

## Description

[Technical Field]

[Cross-Reference to Related Application]

This application claims priority to Korean Patent Application No. 10-2023-0143765, filed on October 25, 2023, based on the priority of the above patent, in the Korean Intellectual Property Office, the disclosures of each of which are incorporated herein by reference.

The present invention relates to a thermoplastic resin composition, a method of preparing the same and a molded article including the same, and more particularly to a thermoplastic resin composition having processability equivalent to or higher than that of a conventional material, PVC resin, for calender processing and having excellent surface quality without flow marks, bubbles, and plate out, and capable of being calendered using existing calendering equipment without changing the equipment, a method of preparing the thermoplastic resin composition and a molded article including the thermoplastic resin composition.

[Background Art]

A calender refers to a rolling machine in which several heating rollers are arranged. In addition, a process of forming a film, sheet, or the like using a calender or a process of coating the surface of fabric, paper, or the like with plastic using a calender is called a calender process or calendering. Compared to an extrusion process, the calendering has the disadvantage of high equipment cost, but the calendering can realize excellent quality. Accordingly, calendering is widely used in the manufacture of polyvinyl chloride resin (hereinafter referred to as 'PVC resin') .

PVC resin is a homopolymer of vinyl chloride or a copolymer containing vinyl chloride in an amount of 50 % by weight or more, and is one of the five general-purpose thermoplastic resins prepared by suspension polymerization or emulsion polymerization. Thereamong, the PVC resin prepared by suspension polymerization is mixed with a plasticizer, a stabilizer, a filler, a pigment, titanium dioxide ($TiO_2$), and additives having special functions, and is widely used in the manufacture of films, sheets, wires, pipes, and the like through various processing methods. The PVC resin is widely used as a surface finishing material for furniture due to its low cost, excellent physical properties, and high processability. However, the PVC resin is difficult to reprocess and generates harmful chlorine and hydrogen chloride gases when burned. In addition, a phthalate-based compound used as a plasticizer to impart flexibility is harmful to the human body, and hazardous substances are generated during preparation using the phthalate-based compound and disposal thereof.

To solve these problems, research on materials that can replace the PVC resin is being actively conducted. Among the materials being studied, an acrylonitrile-styrene-acrylate resin (hereinafter referred to as "ASA resin") has excellent weather resistance, light resistance, colorability, chemical resistance, and impact resistance, and is used in various fields such as automobiles, building materials, and miscellaneous goods. In particular, compared to the PVC resin, the ASA resin is attracting attention as an eco-friendly material because the ASA resin has excellent processing stability and does not contain heavy metal components.

However, in the case of the conventional ASA resin for calendering, calender processability is low, and flow marks, bubbles, plate out, etc. occur, which deteriorate surface quality. Accordingly, there have been difficulties in implementing a luxurious appearance required in the market.

Therefore, the development of an eco-friendly material with excellent coloring, gloss and calendar processability to implement a luxurious appearance demanded in the market is required.

[Related Art Document]

[Patent Document]

KR 2006-0118820 A

[Disclosure]

[Technical Problem]

Therefore, the present invention has been made in view of the above problems, and it is one object of the present invention to provide a thermoplastic resin composition having processability equivalent to or higher than that of a conventional material for calender processing, PVC resin, and having excellent surface quality without flow marks, bubbles, and plate out, capable of producing less hazardous substances during molding and incineration, and capable of

being calendered using existing calendering equipment without changing the equipment, a method of preparing the thermoplastic resin composition and a molded article including the thermoplastic resin composition.

It is another object of the present invention to provide a method of preparing the thermoplastic resin composition.

It is yet another object of the present invention to provide a molded article manufactured using the thermoplastic resin composition.

The above and other objects can be accomplished by the present invention described below.

[Technical Solution]

I) In accordance with an aspect of the present invention, the above and other objects can be accomplished by the provision of a thermoplastic resin composition, comprising: 100 parts by weight of a base resin including 25 to 75 % by weight of one or more copolymers (A) selected from the group consisting of a copolymer (a-1) including an alkyl acrylate rubber having an average particle diameter of 50 to 150 nm, an aromatic vinyl compound and a vinyl cyanide compound, a copolymer (a-2) including an alkyl acrylate rubber having an average particle diameter of greater than 150 nm and 600 nm or less, an aromatic vinyl compound and a vinyl cyanide compound, and a copolymer (a-3) including an alkyl acrylate rubber having an average particle diameter of 50 nm to 120 nm, an aromatic vinyl compound and a vinyl cyanide compound, and 25 to 75 % by weight of one or more matrix resins (B) selected from the group consisting of an aromatic vinyl compound-vinyl cyanide compound copolymer (b-1) and a (meth)acrylic acid alkyl ester polymer (b-2); and (C) 0.3 to 2 parts by weight of a pentaerythritol-based lubricant, wherein the copolymer (a-3) has an alkyl acrylate coverage (X) value of 65 % by weight or more as calculated by Equation 1 below:

[Equation 1]

$$X = \{(G-Y)/Y\} * 100$$

where G represents a gel content (wt%) based on the total weight of the copolymer (A), and Y represents an alkyl acrylate content (wt%) in a gel based on the total weight of the copolymer (A).

II) In accordance with another aspect of the present invention, there is provided a thermoplastic resin composition, including 100 parts by weight of a base resin including 25 to 75 % by weight of one or more graft copolymers (A) selected from the group consisting of an alkyl acrylate-aromatic vinyl compound-vinyl cyanide compound graft copolymer (a-1) including an alkyl acrylate rubber having an average particle diameter of 50 to 150 nm, an alkyl acrylate-aromatic vinyl compound-vinyl cyanide compound graft copolymer (a-2) including an alkyl acrylate rubber having an average particle diameter of greater than 150 nm and 600 nm or less, and an alkyl acrylate-an aromatic vinyl compound-vinyl cyanide compound graft copolymer (a-3) including an alkyl acrylate rubber having an average particle diameter of 50 nm to 120 nm, and 25 to 75 % by weight of one or more matrix resins (B) selected from the group consisting of an aromatic vinyl compound-vinyl cyanide compound copolymer (b-1) and a (meth)acrylic acid alkyl ester polymer (b-2); and 0.3 to 2 parts by weight of a pentaerythritol-based lubricant (C), wherein the graft copolymer (a-3) has an alkyl acrylate coverage (X) value of 65 % by weight or more as calculated by Equation 1 below. In this case, processability may be equivalent to or higher than that of a conventional material, PVC resin, for calender processing, surface quality may be excellent due to the absence of flow marks, bubbles, and plate out, and calender processing may be performed using existing calendering equipment.

[Equation 1]

$$X = \{(G-Y)/Y\} * 100$$

where G represents a gel content (wt%) based on the total weight of the graft copolymer, and Y represents an alkyl acrylate content (wt%) in a gel based on the total weight of the graft copolymer.

III) In I), the copolymer (a-1), the copolymer (a-2) and/or the copolymer (a-3) may be a graft copolymer.

IV) In I) to III), the pentaerythritol-based lubricant (C) may have a melting point of 100 °C or less.

V) In I) to IV), the thermoplastic resin composition may further include 0.1 to 1.5 parts by weight of a glyceryl-based lubricant (D) based on 100 parts by weight of the base resin.
VI) In I) to V), the glyceryl-based lubricant (D) may have a molecular weight of 400 g/mol or less.
VII) In I) to VI), the copolymer (a-1) may include 35 to 65 % by weight of an alkyl acrylate rubber, 20 to 55 % by weight of an aromatic vinyl compound and 3 to 25 % by weight of a vinyl cyanide compound based on the total weight of the graft copolymer (a-1).
VIII) In I) to VII), the copolymer (a-2) may include 35 to 65 % by weight of an alkyl acrylate rubber, 20 to 55 % by weight of an aromatic vinyl compound and 3 to 25 % by weight of a vinyl cyanide compound based on the total weight of the copolymer (a-2) .
IX) In I) to VIII), the copolymer (a-3) may have a grafting degree of 60 % or more, as calculated by Equation 2 below:

Grafting degree (%)=[Weight (g) of grafted monomers/Weight (g) of rubber]*100 [Equation 2]

where the weight (g) of grafted monomers is obtained by subtracting the weight (g) rubber from the weight (g) of insoluble matter (gel) obtained by dissolving the copolymer in acetone and then performing centrifugation, and the weight (g) of rubber is a weight (g) of rubber components theoretically added to copolymer powder.
X) In I) to IX), the copolymer (a-3) may include 20 to 60 % by weight of an alkyl acrylate rubber; and 40 to 80 % by weight of an aromatic vinyl compound-vinyl cyanide compound copolymer surrounding the alkyl acrylate rubber based on the total weight of the copolymer (a-3).
XI) In I) to X), the aromatic vinyl compound-vinyl cyanide compound copolymer (b-1) may be one or more selected from the group consisting of an aromatic vinyl compound-vinyl cyanide compound copolymer having a weight average molecular weight of 100,000 to 150,000 g/mol and an aromatic vinyl compound-vinyl cyanide compound copolymer having a weight average molecular weight of greater than 150,000 g/mol and 200,000 g/mol or less.
XII) In I) to XI), the (meth) acrylic acid alkyl ester polymer (b-2) may include one or more selected from the group consisting of a (meth)acrylic acid methyl ester, a (meth)acrylic acid ethyl ester, a (meth)acrylic acid propyl ester, a (meth)acrylic acid 2-ethyl hexyl ester, a (meth)acrylic acid decyl ester, and a (meth)acrylic acid lauryl ester.
XIII) In I) to XII), the polymer (b-2) may have a weight average molecular weight of 50,000 to 150,000 g/mol.

In addition, in accordance with another aspect of the present invention, there is provided XIV) a method of preparing a thermoplastic resin composition, the method comprising: kneading and extruding 100 parts by weight of a base resin including 25 to 75 % by weight of one or more copolymers (A) selected from the group consisting of a copolymer (a-1) including an alkyl acrylate rubber having an average particle diameter of 50 to 150 nm, an aromatic vinyl compound and a vinyl cyanide compound, a copolymer (a-2) including an alkyl acrylate rubber having an average particle diameter of greater than 150 nm and 600 nm or less, an aromatic vinyl compound and a vinyl cyanide compound, and a copolymer (a-3) including an alkyl acrylate rubber having an average particle diameter of 50 nm to 120 nm, an aromatic vinyl compound and a vinyl cyanide compound, and 25 to 75 % by weight of one or more matrix resins (B) selected from the group consisting of an aromatic vinyl compound-vinyl cyanide compound copolymer (b-1) and a (meth) acrylic acid alkyl ester polymer (b-2); and (C) 0.3 to 2 parts by weight of a pentaerythritol-based lubricant under conditions of 200 to 300 °C and 100 to 500 rpm,

wherein the copolymer (a-3) has an alkyl acrylate coverage (X) value of 65 % by weight or more as calculated by Equation 1 below:

[Equation 1]

$$X = \{(G-Y)/Y\} * 100$$

(In Equation 1, G represents a gel content (wt%) based on the total weight of the copolymer (A), and Y represents an alkyl acrylate content (wt%) in a gel based on the total weight of the copolymer (A).)
XV) In XIV), the copolymer (a-1), the copolymer (a-2) and/or the copolymer (a-3) may be a graft copolymer.
XVI) In accordance with another aspect of the present invention, there is provided a method of preparing a thermoplastic resin composition, the method including kneading and extruding a thermoplastic resin composition including 100 parts by weight of a base resin including 25 to 75 % by weight of one or more graft copolymers (A) selected from the group consisting of an alkyl acrylate-aromatic vinyl compound-vinyl cyanide compound graft copolymer (a-1) including an alkyl acrylate rubber having an average particle diameter of 50 to 150 nm, an alkyl

acrylate-aromatic vinyl compound-vinyl cyanide compound graft copolymer (a-2) including an alkyl acrylate rubber having an average particle diameter of greater than 150 nm and 600 nm or less, and an alkyl acrylate-an aromatic vinyl compound-vinyl cyanide compound graft copolymer (a-3) including an alkyl acrylate rubber having an average particle diameter of 50 nm to 120 nm, and 25 to 75 % by weight of one or more matrix resins (B) selected from the group consisting of an aromatic vinyl compound-vinyl cyanide compound copolymer (b-1) and a (meth)acrylic acid alkyl ester polymer (b-2); and 0.3 to 2 parts by weight of a pentaerythritol-based lubricant (C) under conditions of 200 to 300 °C and 100 to 500 rpm, wherein the graft copolymer (a-3) has an alkyl acrylate coverage (X) value of 65 % by weight or more, as calculated by Equation 1 below:

[Equation 1]

$$X = \{(G-Y)/Y\} * 100$$

In Equation 1, G represents a gel content (wt%) based on the total weight of the graft copolymer, and Y represents an alkyl acrylate content (wt%) in a gel based on the total weight of the graft copolymer.

XVII) In XIV) to XVI), the method of preparing the thermoplastic resin composition may include 0.1 to 1.5 parts by weight of a glyceryl-based lubricant (D) based on 100 parts by weight of the base resin.

XVIII) In accordance with yet another aspect of the present invention, there is provided a molded article including the thermoplastic resin composition of any one of I) to XIII).

[Advantageous Effects]

The present invention provides a thermoplastic resin composition that that does not contain harmful environmental hormones such as phthalate compounds, does not emit toxic gases in the event of fire, has processability equivalent to or higher than that of a conventional material for calender processing, PVC resin, and has excellent surface quality without flow marks, bubbles, and plate out, and can be calendered using existing calendering equipment.

In particular, the thermoplastic resin composition of the present invention enables easy calender processing, without replacing components, using existing calendering equipment, and further has excellent calender processability, thereby improving productivity.

[Best Mode]

Hereinafter, a thermoplastic resin composition of the present invention, a method of preparing the same, and a molded article including the same will be described in detail.

The present inventors confirmed that, when a base resin including a copolymer, which includes an alkyl acrylate rubber having a predetermined average particle diameter, an aromatic vinyl compound and a vinyl cyanide compound, and a predetermined matrix resin contains a pentaerythritol-based lubricant in a predetermined content and an alkyl acrylate coverage value of the copolymer is adjusted in a predetermined range, calender processing can be performed using existing equipment used for calender processing of PVC resin, equal or superior processability, compared to the case of an existing material, a PVC resin, for calendnering processing, can be provided, mechanical properties and weather resistance are excellent, and flow marks, bubbles, and plate out are not generated on calendar molded articles, resulting in improvement of surface quality. Based on these results, the present inventors conducted further studies to complete the present invention.

The thermoplastic resin composition of the present invention will be described in detail as follows.

The thermoplastic resin composition of the present disclosure includes 100 parts by weight of a base resin including 25 to 75 % by weight of one or more copolymers (A) selected from the group consisting of a copolymer (a-1) including an alkyl acrylate rubber having an average particle diameter of 50 to 150 nm, an aromatic vinyl compound and a vinyl cyanide compound, a copolymer (a-2) including an alkyl acrylate rubber having an average particle diameter of greater than 150 nm and 600 nm or less, an aromatic vinyl compound and a vinyl cyanide compound, and a copolymer (a-3) including an alkyl acrylate rubber having an average particle diameter of 50 nm to 120 nm, an aromatic vinyl compound and a vinyl cyanide compound, and 25 to 75 % by weight of one or more matrix resins (B) selected from the group consisting of an aromatic vinyl compound-vinyl cyanide compound copolymer (b-1) and a (meth)acrylic acid alkyl ester polymer (b-2); and (C) 0.3 to 2 parts by weight of a pentaerythritol-based lubricant, wherein the graft copolymer (a-3) has an alkyl acrylate coverage (X) value of 65 % by weight or more as calculated by Equation 1 below. In this case, processability may be equivalent to or higher than that of a conventional material, PVC resin, for calender processing,

surface quality may be excellent due to the absence of flow marks, bubbles, and plate out, and calender processing may be performed using existing calendering equipment.

[Equation 1]

$$X = \{(G-Y)/Y\} * 100$$

(In Equation 1, G represents a gel content (wt%) based on the total weight of the copolymer (A), and Y represents an alkyl acrylate content (wt%) in a gel based on the total weight of the copolymer (A).)

In addition, the thermoplastic resin composition of the present disclosure includes 100 parts by weight of a base resin including 25 to 75 % by weight of one or more graft copolymers (A) selected from the group consisting of an alkyl acrylate-aromatic vinyl compound-vinyl cyanide compound graft copolymer (a-1) including an alkyl acrylate rubber having an average particle diameter of 50 to 150 nm, an alkyl acrylate-aromatic vinyl compound-vinyl cyanide compound graft copolymer (a-2) including an alkyl acrylate rubber having an average particle diameter of greater than 150 nm and 600 nm or less, and an alkyl acrylate-an aromatic vinyl compound-vinyl cyanide compound graft copolymer (a-3) including an alkyl acrylate rubber having an average particle diameter of 50 nm to 120 nm, and 25 to 75 % by weight of one or more matrix resins (B) selected from the group consisting of an aromatic vinyl compound-vinyl cyanide compound copolymer (b-1) and a (meth) acrylic acid alkyl ester polymer (b-2); and 0.3 to 2 parts by weight of a pentaerythritol-based lubricant (C), wherein the graft copolymer (a-3) has an alkyl acrylate coverage (X) value of 65 % by weight or more as calculated by Equation 1 below. In this case, processability may be equivalent to or higher than that of a conventional material, PVC resin, for calender processing, surface quality may be excellent due to the absence of flow marks, bubbles, and plate out, and calender processing may be performed using existing calendering equipment.

[Equation 1]

$$X = \{(G-Y)/Y\} * 100$$

In Equation 1, G represents a gel content (wt%) based on the total weight of the graft copolymer, and Y represents an alkyl acrylate content (wt%) in a gel based on the total weight of the graft copolymer.

Hereinafter, each component of the thermoplastic resin composition of the present invention will be described in detail.

## Copolymer (A)

For example, the copolymer (A) may be included in an amount of 25 to 75 % by weight, preferably 30 to 70 % by weight, more preferably 35 to 65 % by weight, even more preferably 45 to 65 % by weight, even still more preferably 47 to 57 % by weight, based on the total weight of the base resin. Within this range, processability may be equivalent to or higher than that of a conventional material, PVC resin, for calender processing, mechanical properties, weather resistance, gloss and transparency may be excellent, surface quality may be excellent due to the absence of flow marks, bubbles, and plate out, and calender processing may be performed using existing calendering equipment.

In addition, the copolymer (A) may be, for example, one or more copolymers (A) selected from the group consisting of a copolymer (a-1) including an alkyl acrylate rubber having an average particle diameter of 50 to 150 nm, an aromatic vinyl compound and a vinyl cyanide compound, a copolymer (a-2) including an alkyl acrylate rubber having an average particle diameter of greater than 150 nm and 600 nm or less, an aromatic vinyl compound and a vinyl cyanide compound, and a copolymer (a-3) including an alkyl acrylate rubber having an average particle diameter of 50 nm to 120 nm, an aromatic vinyl compound and a vinyl cyanide compound, preferably a mixture of the copolymer (a-1) and the copolymer (a-2), or the copolymer (a-3), more preferably the copolymer (a-3). In this case, processability may be equivalent to or higher than that of a conventional material, PVC resin, for calender processing, mechanical properties and weather resistance may be excellent, surface quality may be excellent due to the absence of flow marks, bubbles, and plate out, and calender processing may be performed using existing calendering equipment.

The copolymer (a-1), the copolymer (a-2) and/or the copolymer (a-3) may be preferably graft copolymers. In this case, mechanical properties and weather resistance may be excellent.

In addition, the (A) graft copolymer may be, for example, one or more (A) selected from the group consisting of an alkyl acrylate-aromatic vinyl compound-vinyl cyanide compound graft copolymer (a-1) including an alkyl acrylate rubber having an average particle diameter of 50 to 150 nm, an alkyl acrylate-aromatic vinyl compound-vinyl cyanide compound graft copolymer (a-2) including an alkyl acrylate rubber having an average particle diameter of greater than 150 nm and 600

nm or less, and an alkyl acrylate-an aromatic vinyl compound-vinyl cyanide compound graft copolymer (a-3) including an alkyl acrylate rubber having an average particle diameter of 50 nm to 120 nm, preferably a mixture of the graft copolymer (a-1) and the graft copolymer (a-2), or the graft copolymer (a-3), more preferably the graft copolymer (a-3). In this case, processability may be equivalent to or higher than that of a conventional material, PVC resin, for calender processing, mechanical properties and weather resistance may be excellent, surface quality may be excellent due to the absence of flow marks, bubbles, and plate out, and calender processing may be performed using existing calendering equipment.

In this description, "plate out" refers to the appearance of a lubricant or plasticizer on the surface of a product.

**(a-1) Copolymer including alkyl acrylate rubber having average particle diameter of 50 to 150 nm, aromatic vinyl compound and vinyl cyanide compound**

The copolymer (a-1) including an alkyl acrylate rubber having an average particle diameter of 50 to 150 nm, an aromatic vinyl compound and a vinyl cyanide compound may be preferably an alkyl acrylate-aromatic vinyl compound-vinyl cyanide compound graft copolymer (a-1) including an alkyl acrylate rubber having an average particle diameter of 50 to 150 nm. In this case, mechanical properties may be maintained, and gloss, transparency, coloring properties and calender processability may be excellent.

The alkyl acrylate rubber of the graft copolymer (a-1) may have an average particle diameter of preferably 60 to 140 nm, more preferably 80 to 140 nm, even more preferably 100 to 140 nm, even still more preferably 110 to 140 nm. Within this range, mechanical properties may be maintained, and gloss, transparency, coloring properties and calender processability may be excellent.

In the present disclosure, the average particle diameter may be measured by dynamic light scattering, and specifically, may be measured as an intensity value using a Nicomp 380 particle size analyzer (manufacturer: PSS) in a Gaussian mode. As a specific measurement example, a sample may be prepared by diluting 0.1 g of latex (TSC: 35 to 50 wt%) 1,000 to 5,000-fold with distilled water, and the average particle diameter may be measured using flow cells in an auto-dilution manner and in a mode of dynamic light scattering/intensity 300 kHz/intensity-weight Gaussian analysis. At this time, temperature may be set to 23 °C, measurement wavelength may be set to 632.8 nm, and channel width may be set to 10 μsec.

The graft copolymer (a-1) may include preferably an alkyl acrylate rubber (core) and an aromatic vinyl compound-vinyl cyanide compound copolymer (shell) surrounding the alkyl acrylate rubber. In this case, mechanical properties may be maintained, and gloss, transparency, coloring properties and processability may be excellent.

The graft copolymer (a-1) may include 35 to 65 % by weight of an alkyl acrylate rubber, 20 to 55 % by weight of an aromatic vinyl compound and 3 to 25 % by weight of a vinyl cyanide compound, based on the total weight of the graft copolymer (a-1) . Within this range, mechanical properties may be maintained, and gloss, transparency, coloring properties and processability may be excellent.

Preferably, the graft copolymer (a-1) may include 40 to 60 % by weight of an alkyl acrylate rubber, 25 to 50 % by weight of an aromatic vinyl compound and 5 to 20 % by weight of a vinyl cyanide compound. Within this range, mechanical properties may be maintained, and gloss, transparency, coloring properties and processability may be excellent.

More preferably, the graft copolymer (a-1) may include 45 to 55 % by weight of an alkyl acrylate rubber, 33 to 43 % by weight of an aromatic vinyl compound and 10 to 15 % by weight of a vinyl cyanide compound. Within this range, mechanical properties may be maintained, and gloss, transparency, coloring properties and processability may be excellent.

The graft copolymer (a-1) may be prepared, for example, by emulsion polymerization. In this case, gloss, transparency, and coloring properties may be excellent while maintaining mechanical properties.

Emulsion polymerization methods commonly practiced in the art to which the present invention pertains may be used in the present invention without particular limitation. For example, an emulsion graft polymerization method may be used.

For example, the graft copolymer (a-1) may have a grafting degree of 15 to 60 %, preferably 20 to 50 %, more preferably 25 to 45 %, as calculated by Equation 2. Within this range, calender processability may be improved due to excellent processing dispersion with a matrix resin (B) described below.

Grafting degree (%)=[Weight (g) of grafted monomers/Weight (g) of rubber]*100 [Equation 2]

(In Equation 2, the weight (g) of grafted monomers is obtained by subtracting rubber weight (g) from the weight (g) of insoluble matter (gel) obtained by dissolving the copolymer in acetone and performing centrifugation, and the rubber weight (g) is the weight (g) of rubber components theoretically added to copolymer powder.)

When the weight of insoluble matter (gel) is measured, 0.5 g of the powdered copolymer is added to 50 ml of acetone, followed by stirring at room temperature for 12 hours. Then, centrifugation is performed to separate insoluble

matter that is not dissolved in acetone, followed by drying for 12 hours. Then, the weight of the insoluble matter (gel) is measured. The rubber weight (g) is the weight (g) of rubber components theoretically added to 0.5 g of the powdered copolymer (A).

As a specific measurement example, when measuring the weight (g) of insoluble matter (gel), 0.5 g of a powdered copolymer is added to 50 ml of acetone, followed by stirring at 210 rpm and room temperature using an orbital shaker (equipment name: Lab companion SKC-6075) for 12 hours. Then, centrifugation is performed at 0 °C and 18,000 rpm for 3 hours using a centrifuge (Supra R30, Hanil Science Co.) to separate insoluble matter that is not dissolved in acetone, followed by drying in a forced convection oven (equipment name: Lab companion OF-12GW) set to 85 °C for 12 hours via forced circulation. Then, the weight of the insoluble matter (gel) is measured.

For example, the graft copolymer (a-1) may be included in an amount of 0 to 75 % by weight, preferably 1 to 55 % by weight, more preferably 3 to 35 % by weight, even more preferably 5 to 15 % by weight, based on the total weight of the base resin. Within this range, gloss and transparency may be excellent, and the occurrence of whitening during bending processing may be reduced.

In this disclosure, the alkyl acrylate may be, for example, an alkyl acrylate having 1 to 15 carbon atoms in an alkyl group thereof, preferably one or more selected from the group consisting of methyl acrylate, ethyl acrylate, propyl acrylate, butyl acrylate, 2-ethylbutyl acrylate, octyl acrylate, 2-ethylhexyl acrylate, hexyl acrylate, heptyl acrylate, n-pentyl acrylate and lauryl acrylate, more preferably an alkyl acrylate including an alkyl group having 1 to 4 or 8 carbon atoms, even more preferably butyl acrylate, ethylhexyl acrylate, or a mixture thereof, even still more preferably butyl acrylate.

In the present disclosure, for example, the aromatic vinyl compound may include one or more selected from the group consisting of styrene, α-methyl styrene, o-methyl styrene, p-methyl styrene, m-methyl styrene, ethyl styrene, isobutyl styrene, t-butyl styrene, o-bromostyrene, p-bromostyrene, m-bromostyrene, o-chlorostyrene, p-chlorostyrene, m-chlorostyrene, vinyltoluene, vinylxylene, fluorostyrene, and vinylnaphthalene, preferably one or more selected from the group consisting of styrene and α-methyl styrene, more preferably styrene. In this case, due to appropriate fluidity, processability and mechanical properties such as impact resistance may be excellent.

In the present disclosure, for example, the vinyl cyanide compound may include one or more selected from the group consisting of acrylonitrile, methacrylonitrile, phenylacrylonitrile, and α-chloroacrylonitrile, preferably acrylonitrile.

In the present disclosure, a polymer including a certain compound (monomer) means a polymer prepared by polymerizing the compound (monomer), and a unit in the polymer is derived from the compound.

## (a-2) Copolymer including alkyl acrylate rubber having average particle diameter of greater than 150 nm and 600 nm or less, aromatic vinyl compound and vinyl cyanide compound

The copolymer (a-2) including an alkyl acrylate rubber having an average particle diameter of greater than 150 nm and 600 nm or less, an aromatic vinyl compound and a vinyl cyanide compound may be preferably an alkyl acrylate-aromatic vinyl compound-vinyl cyanide compound graft copolymer (a-2) including an alkyl acrylate rubber having an average particle diameter of greater than 150 nm and 600 nm or less. In this case, mechanical properties such as impact strength, and processability may be excellent.

The alkyl acrylate rubber of the graft copolymer (a-2) may have an average particle diameter of preferably 200 to 600 nm, more preferably 250 to 500 nm, even more preferably 300 to 470 nm, even still more preferably 330 to 430 nm. Within this range, mechanical properties such as impact strength, and processability may be excellent.

The graft copolymer (a-2) may include preferably an alkyl acrylate rubber (core), and an aromatic vinyl compound-vinyl cyanide compound copolymer (shell) surrounding the alkyl acrylate rubber. In this case, mechanical properties and processability may be excellent.

The graft copolymer (a-2) may include, for example, 35 to 65 % by weight of an alkyl acrylate rubber, 20 to 55 % by weight of an aromatic vinyl compound and 3 to 25 % by weight of a vinyl cyanide compound, based on the total weight of the graft copolymer (a-2). Within this range, mechanical properties such as impact strength, processability and transparency may be excellent.

Preferably, the graft copolymer (a-2) may include 40 to 60 % by weight of an alkyl acrylate rubber, 25 to 50 % by weight of an aromatic vinyl compound and 5 to 20 % by weight of a vinyl cyanide compound. Within this range, mechanical properties such as impact strength, processability and transparency may be excellent.

More preferably, the graft copolymer (a-2) may include 45 to 55 % by weight of an alkyl acrylate rubber, 33 to 43 % by weight of an aromatic vinyl compound and 10 to 15 % by weight of a vinyl cyanide compound. Within this range, mechanical properties such as impact strength, processability and transparency may be excellent.

The types of the alkyl acrylate rubber, aromatic vinyl compound and vinyl cyanide compound included in the graft copolymer (a-2) may be within the same ranges as the types of the alkyl acrylate rubber, aromatic vinyl compound and vinyl cyanide compound included in the copolymer (a-1) of the present disclosure.

The graft copolymer (a-2) may be prepared by emulsion polymerization. In this case, mechanical properties, such as impact strength, and transparency may be excellent.

Emulsion polymerization methods commonly practiced in the art to which the present invention pertains may be used in the present invention without particular limitation. For example, an emulsion graft polymerization method may be used.

The graft copolymer (a-2) may have, for example, a grafting degree of 40 to 120 %, preferably 45 to 100 %, more preferably 45 to 80 %, as calculated by Equation 2 above. Within this range, mechanical properties such as impact strength, and processability may be excellent.

The graft copolymer (a-2) may be included in an amount of, for example, 0 to 75 % by weight, preferably 5 to 55 % by weight, more preferably 15 to 35 % by weight, even more preferably 20 to 35 % by weight, based on the total weight of the base resin. Within this range, mechanical properties, processability and transparency may be excellent.

**(a-3) Copolymer including alkyl acrylate rubber having average particle diameter 50 to 120 nm, aromatic vinyl compound and vinyl cyanide compound**

The copolymer (a-3) including an alkyl acrylate rubber having an average particle diameter of 50 nm to 120 nm, an aromatic vinyl compound and a vinyl cyanide compound may be preferably an alkyl acrylate-aromatic vinyl compound-vinyl cyanide compound graft copolymer (a-3) including an alkyl acrylate rubber having an average particle diameter of 50 to 120 nm. In this case, processability may be equivalent to or higher than that of a conventional material, PVC resin, for calender processing, surface quality may be excellent due to the absence of flow marks, bubbles, and plate out, and calender processing may be performed using existing calendering equipment.

The alkyl acrylate rubber of the graft copolymer (a-3) may have an average particle diameter of preferably 50 to 110 nm, more preferably 50 to 100 nm, even still more preferably 60 to 90 nm. Within this range, processability may be equivalent to or higher than that of a conventional material, PVC resin, for calender processing, surface quality may be excellent due to the absence of flow marks, bubbles, and plate out, and calender processing may be performed using existing calendering equipment.

For example, the graft copolymer (a-3) may have an alkyl acrylate coverage (X) value of 65 % by weight or more, preferably 75 % by weight or more, more preferably 85 % by weight or more, still more preferably 85 to 140 % by weight, still more preferably 95 to 120 % by weight as calculated by Equation 1 below. Within this range, mechanical properties, transparency, gloss and calender processability may be excellent. In particular, occurrence of whitening may be reduced during bending processing, thereby providing a beautiful appearance;

[Equation 1]

$$X = \{(G-Y)/Y\} \times 100$$

In Equation 1, G represents a gel content (wt%) based on the total weight of the copolymer (A), and Y represents an alkyl acrylate content (wt%) in a gel based on the total weight of the copolymer (A).

In Equation 1, the alkyl acrylate content in the gel of the copolymer refers to an alkyl acrylate content (based on 100% by weight in total of the added copolymer) in the insoluble matter collected in the process of calculating a gel content described above. Here, the gel content refers to the content of insoluble matter based on 100% by weight in total of the copolymer.

The alkyl acrylate content is quantitatively measured through nuclear magnetic resonance (NMR) analysis or Fourier transform infrared spectroscopy (FT-IR) analysis.

In the present disclosure, unless otherwise specified, NMR analysis means analysis by $^1$H NMR.

In the present disclosure, NMR analysis may be performed using methods commonly practiced in the art. Specific measurement examples are as follows.

- Equipment name: Bruker 600MHz NMR (AVANCE III HD) CPP BB(1H 19F tunable and broadband, with z-gradient) Prodigy Probe
- Measurement conditions: 1H NMR (zg30): ns=32, d1=5s, TCE-d2, at room temp.

In the present disclosure, FT-IR analysis may be performed using methods commonly practiced in the art. Specific measurement examples are as follows.

- Equipment name: Agilent Cary 660
- Measurement condition: ATR mode

When measuring the gel content, 1 g of a copolymer is added to 30 ml of acetone, followed by stirring at room temperature for 12 hours. Then, centrifugation is performed to separate insoluble matter that is not dissolved in acetone, followed by drying for 12 hours. Then, the weight of the insoluble matter is measured, and the gel content is calculated by Equation 3 below. As a specific measurement example, when measuring the gel content, 1 g of a copolymer is added to 30 ml of acetone, followed by stirring at 210 rpm and room temperature using an orbital shaker (equipment name: Lab companion SKC-6075) for 12 hours. Then, centrifugation is performed at 0 °C and 18,000 rpm for 3 hours using a centrifuge (Supra R30, Hanil Science Co.) to separate insoluble matter that is not dissolved in acetone, followed by drying in a forced convection oven (equipment name: Lab companion OF-12GW) set to 85 °C for 12 hours via forced circulation. Then, the weight of the insoluble matter is measured.

Gel content (wt%) = [Weight (g) of insoluble matter (gel)/Weight (g) of sample] x 100 [Equation 3]

In the present disclosure, the alkyl acrylate coverage value is a parameter that indicates the degree of dispersion of the aromatic vinyl compound-vinyl cyanide compound polymer grafted onto the alkyl acrylate rubber in the copolymer including an alkyl acrylate rubber, an aromatic vinyl compound and a vinyl cyanide compound. A high alkyl acrylate coverage value indicates that the aromatic vinyl compound-vinyl cyanide compound polymer grafted onto the alkyl acrylate rubber is evenly distributed. That is, the polymer evenly surrounds the rubber. In this case, gloss and transparency may increase, and mechanical properties, colorability, and non-whitening properties may be excellent. In addition, as the alkyl acrylate coverage value increases, the alkyl acrylate homogeneity between the inside and outside of the graft copolymer gel increases. Thus, when the alkyl acrylate coverage value is high, defective areas caused by external stress may be reduced, and voids due to cracks occurring inside the graft copolymer may be reduced, thereby suppressing the occurrence of whitening during bending.

Examining the difference between the alkyl acrylate coverage value and the grafting degree, the alkyl acrylate coverage value is calculated based on the content of the alkyl acrylate actually present in the graft copolymer using an NMR analyzer or FT-IR and the grafting degree is calculated based on the content of rubber components added during polymerization.

The graft copolymer (a-3) may preferably include alkyl acrylate rubber (core) and an aromatic vinyl compound-vinyl cyanide compound copolymer (shell) surrounding the alkyl acrylate rubber.

For example, based on the total weight of the graft copolymer (a-3), the graft copolymer (a-3) may include 20 to 60 % by weight of alkyl acrylate rubber and 40 to 80 % by weight of an aromatic vinyl compound-vinyl cyanide compound copolymer surrounding the alkyl acrylate rubber, preferably 30 to 50 % by weight of alkyl acrylate rubber and 50 to 70 % by weight of an aromatic vinyl compound-vinyl cyanide compound copolymer surrounding the alkyl acrylate rubber, more preferably 40 to 50 % by weight of alkyl acrylate rubber and 50 to 60 % by weight of an aromatic vinyl compound-vinyl cyanide compound copolymer surrounding the alkyl acrylate rubber. Within this range, mechanical properties, gloss, transparency, weather resistance, and calender processability may be excellent, and the occurrence of whitening may be reduced during bending processing, thereby providing a luxurious appearance.

For example, the alkyl acrylate rubber may be prepared by emulsion-polymerizing an alkyl acrylate. Preferably, the alkyl acrylate rubber may be prepared by mixing an alkyl acrylate, an emulsifier, an initiator, a grafting agent, a crosslinking agent, an electrolyte, and a solvent and emulsion-polymerizing the mixture. In this case, due to excellent grafting efficiency, mechanical properties may be excellent.

For example, the alkyl acrylate rubber may further include an aromatic vinyl compound. In this case, chemical resistance and impact resistance may be excellent.

For example, based on 100 % by weight in total of the alkyl acrylate rubber, the alkyl acrylate rubber may include the aromatic vinyl compound in an amount of 0.1 to 25 % by weight, preferably 2 to 23 % by weight, more preferably 5 to 20 % by weight. Within this range, impact resistance, gloss, transparency, and weather resistance may be excellent without deteriorating physical properties.

For example, the aromatic vinyl compound-vinyl cyanide compound copolymer (shell) may have a weight average molecular weight of 40,000 to 120,000 g/mol, preferably 50,000 to 110,000 g/mol, more preferably 60,000 to 110,000 g/mol. Within this range, processability may be excellent without reducing impact strength, and the occurrence of whitening may be reduced during bending processing.

In the present disclosure, unless otherwise defined, the weight average molecular weight may be measured using gel permeation chromatography (GPC, Waters Breeze). As a specific example, the weight average molecular weight may be measured using tetrahydrofuran (THF) as an eluate through gel permeation chromatography (GPC, Waters Breeze) . In this case, weight average molecular weight is obtained as a relative value to a polystyrene (PS) standard sample. As a specific measurement example, the weight average molecular weight may be measured under conditions of solvent: THF, column temperature: 40 °C, flow rate: 0.3 ml/ min, sample concentration: 20 mg/ml, injection amount: 5 μl, column model: 1× PLgel 10 μm MiniMix-B (250 × 4.6 mm) + 1× PLgel 10 μm MiniMix-B (250 × 4.6 mm) + 1×

PLgel 10 μm MiniMix-B Guard (50 × 4.6 mm), equipment name: Agilent 1200 series system, refractive index detector: Agilent G1362 RID, RI temperature: 35 °C, data processing: Agilent ChemStation S/W, and test method (Mn, Mw and PDI): OECD TG 118.

For example, based on the total weight of the aromatic vinyl compound-vinyl cyanide compound copolymer (shell), the aromatic vinyl compound-vinyl cyanide compound copolymer (shell) may include 55 to 85 % by weight of an aromatic vinyl compound and 15 to 45 % by weight of a vinyl cyanide compound, preferably 60 to 80 % by weight of an aromatic vinyl compound and 20 to 40 % by weight of a vinyl cyanide compound, more preferably 65 to 75 % by weight of an aromatic vinyl compound and 25 to 35 % by weight of a vinyl cyanide compound. Within this range, impact resistance and weather resistance may be excellent.

Preferably, the aromatic vinyl compound-vinyl cyanide compound copolymer (shell) may further include an alkyl acrylate. In this case, impact resistance, weather resistance, processability and calender processability may be excellent, and the occurrence of whitening during bending processing may be reduced.

For example, based on the total weight of the aromatic vinyl compound-vinyl cyanide compound copolymer (shell), the aromatic vinyl compound-vinyl cyanide compound copolymer (shell) may include 55 to 85 % by weight of an aromatic vinyl compound, 10 to 35 % by weight of a vinyl cyanide compound, and 1 to 25 % by weight of an alkyl acrylate, preferably 60 to 80 % by weight of an aromatic vinyl compound, 15 to 30 % by weight of a vinyl cyanide compound, and 3 to 20 % by weight of an alkyl acrylate, more preferably 65 to 72 % by weight of an aromatic vinyl compound, 20 to 25 % by weight of a vinyl cyanide compound, and 5 to 15 % by weight of an alkyl acrylate. Within this range, impact resistance and weather resistance may be excellent.

For example, the graft copolymer (a-3) may be prepared by emulsion polymerization. In this case, gloss and surface hardness may be excellent.

Emulsion polymerization methods commonly practiced in the art to which the present invention pertains may be used in the present invention without particular limitation. For example, an emulsion graft polymerization method may be used.

The graft copolymer (a-3) may have a grafting degree of, for example, 60 % or more, preferably 60 to 150 %, preferably 65 to 140 %, more preferably 65 to 130 %, even more preferably 65 to 100 %, even still more preferably 65 to 80 %, as calculated by Equation 2 below. Within this range, impact resistance and processability may be excellent, and the occurrence of whitening during bending processing may be reduced.

Grafting degree (%)=[Weight (g) of grafted monomers/Weight (g) of rubber]*100 [Equation 2]

(In Equation 2, the weight (g) of grafted monomers is obtained by subtracting the weight (g) of rubber from the weight (g) of insoluble matter (gel) obtained by dissolving the copolymer in acetone and then performing centrifugation, and the weight (g) of rubber is the weight (g) of rubber components theoretically added to copolymer powder.)

When the weight of insoluble matter (gel) is measured, 0.5 g of the powdered copolymer (A) is added to 50 ml of acetone, followed by stirring at room temperature for 12 hours. Then, centrifugation is performed to separate insoluble matter that is not dissolved in acetone, followed by drying for 12 hours. Then, the weight of the insoluble matter (gel) is measured. The weight (g) of rubber is the theoretical weight (g) of rubber components added to 0.5 g of the powdered copolymer (A).

As a specific measurement example, when measuring the weight (g) of insoluble matter (gel), 0.5 g of a powdered copolymer is added to 50 ml of acetone, followed by stirring at 210 rpm and room temperature using an orbital shaker (equipment name: Lab companion SKC-6075) for 12 hours. Then, centrifugation is performed at 0 °C and 18,000 rpm for 3 hours using a centrifuge (Supra R30, Hanil Science Co.) to separate insoluble matter that is not dissolved in acetone, followed by drying in a forced convection oven (equipment name: Lab companion OF-12GW) set to 85 °C for 12 hours via forced circulation. Then, the weight of the insoluble matter (gel) is measured.

For example, the graft copolymer (a-3) may be included in an amount of 0 to 75 % by weight, preferably 30 to 75 % by weight, more preferably 40 to 70 % by weight, even more preferably 45 to 65 % by weight, even still more preferably 47 to 57 % by weight, based on the total weight of the base resin. Within this range, mechanical properties, gloss, transparency and processability may be excellent, and the occurrence of whitening during bending processing may be reduced.

**(B) Matrix resin**

The matrix resin (B) may be included in an amount of, for example, 25 to 75 % by weight, preferably 30 to 70 % by weight, more preferably 35 to 65 % by weight, even more preferably 35 to 55 % by weight, even still more preferably 43 to 53 % by weight, based on the total weight of the base resin. Within this range, tensile strength, elongation, surface hardness and processability may be excellent.

In this disclosure, the matrix resin means a thermoplastic linear copolymer, specifically a polymer that is not

cross-linked, and acts as a matrix within a resin composition.

The matrix resin (B) may be, for example, one or more selected from the group consisting of an aromatic vinyl compound-vinyl cyanide compound copolymer (b-1) and a (meth)acrylic acid alkyl ester polymer (b-2), preferably an aromatic vinyl compound-vinyl cyanide compound copolymer (b-1). In this case, flow marks, bubbles, and plate out may be significantly reduced, so a beautiful appearance may be provided. In addition, calender processing may be performed using existing calendering equipment.

## (b-1) Aromatic vinyl compound-vinyl cyanide compound copolymer

The aromatic vinyl compound-vinyl cyanide compound copolymer (b-1) may be included in an amount of, for example, 0 to 75 % by weight, preferably 25 to 75 % by weight, more preferably 35 to 70 % by weight, even more preferably 40 to 65 % by weight, based on the total weight of the base resin. Within this range, tensile strength, elongation, surface hardness and processability may be excellent.

The aromatic vinyl compound-vinyl cyanide compound copolymer (b-1) may be one or more selected from the group consisting of, for example, an aromatic vinyl compound-vinyl cyanide compound copolymer (b-1-1) having a weight average molecular weight of 100,000 to 150,000 g/mol and (b-1-2) an aromatic vinyl compound-vinyl cyanide compound copolymer having a weight average molecular weight of greater than 150,000 g/mol and 200,000 g/mol or less, preferably may include both the copolymer (b-1-1) and the copolymer (b-1-2). In this case, mechanical properties such as tensile strength and elongation, surface gloss and surface hardness may be excellent.

When including both the copolymer (b-1-1) and the copolymer (b-1-2), the copolymer (b-1-1) may be included in a greater amount than the copolymer (b-1-2). The copolymer (b-1-1) and the copolymer (b-1-2) may be included in, preferably, a weight ratio (b-1-1 : b-1-2) of 5.5:4.5 to 8.5:1.5, more preferably a weight ratio of 6:4 to 8:2, even more preferably a weight ratio of 6.5: 3.5 to 7.8:2.2. Within this range, mechanical properties such as tensile strength and elongation, surface gloss and surface hardness may be excellent, appearance quality may be excellent due to the absence of flow marks, bubbles, and plate out, calender processability may be excellent.

The copolymer (b-1) is preferably styrene-acrylonitrile copolymer (SAN resin), $\alpha$-methyl styrene-acrylonitrile copolymer (heat-resistant SAN resin) or a mixture thereof, more preferably styrene-acrylonitrile copolymer (SAN resin). In this case, mechanical properties such as tensile strength and elongation, surface gloss and surface hardness may be excellent.

The types of the aromatic vinyl compound and vinyl cyanide compound contained in the aromatic vinyl compound-vinyl cyanide compound copolymer (b-1) may be within the same range as the types of the aromatic vinyl compound and vinyl cyanide compound contained in the copolymer (A) of the present disclosure.

The copolymer (b-1) may be prepared by solution polymerization, bulk polymerization, emulsion polymerization, or suspension polymerization, preferably bulk polymerization.

Solution polymerization, bulk polymerization, emulsion polymerization, and suspension polymerization methods commonly practiced in the art to which the present invention pertains may be used in the present invention without particular limitation.

The copolymer (b-1-1) may have a weight average molecular weight of preferably 110,000 to 140,000 g/mol, more preferably 110, 000 to 130,000 g/mol. Within this range, mechanical properties such as tensile strength and elongation, surface gloss and surface hardness may be excellent.

The copolymer (b-1-1) may include, for example, 60 to 85 % by weight of an aromatic vinyl compound and 15 to 40 % by weight of a vinyl cyanide compound, preferably 65 to 80 % by weight of an aromatic vinyl compound and 20 to 35 % by weight of a vinyl cyanide compound, more preferably 72 to 80 % by weight of an aromatic vinyl compound and 20 to 28 % by weight of a vinyl cyanide compound, based on the total weight of the copolymer (b-1-1). Within this range, mechanical properties such as tensile strength and elongation, surface gloss and surface hardness may be excellent.

The copolymer (b-1-2) may have a weight average molecular weight of preferably 160,000 to 190,000 g/mol, more preferably 160,000 to 180,000 g/mol. Within this range, mechanical properties such as tensile strength and elongation, surface gloss and surface hardness may be excellent.

The copolymer (b-1-2) may include, for example, 55 to 80 % by weight of an aromatic vinyl compound and 20 to 45 % by weight of a vinyl cyanide compound, preferably 60 to 75 % by weight of an aromatic vinyl compound and 25 to 40 % by weight of a vinyl cyanide compound, more preferably 63 to 71 % by weight of an aromatic vinyl compound and 29 to 37 % by weight of a vinyl cyanide compound, based on the total weight of the copolymer (b-1-2). Within this range, mechanical properties such as tensile strength and elongation, surface gloss and surface hardness may be excellent.

## (Meth)acrylic acid alkyl ester polymer (b-2)

The (meth)acrylic acid alkyl ester polymer (b-2) may be included in an amount of, for example, 0 to 75 % by weight, preferably 15 to 75 % by weight, more preferably 20 to 55 % by weight, even more preferably 25 to 45 % by weight,

even still more preferably 30 to 40 % by weight, based on the total weight of the base resin. Within this range, mechanical properties may be maintained, transparency and gloss may be excellent, and the occurrence of whitening during bending processing may be reduced.

The (meth) acrylic acid alkyl ester polymer (b-2) may include one or more selected from the group consisting of a (meth)acrylic acid methyl ester, a (meth)acrylic acid ethyl ester, a (meth) acrylic acid propyl ester, a (meth) acrylic acid 2-ethyl hexyl ester, a (meth)acrylic acid decyl ester, and a (meth)acrylic acid lauryl ester, preferably a methacrylic acid alkyl ester, an acrylic acid alkyl ester, or a mixture thereof, more preferably is a polymethyl methacrylate resin. In this case, mechanical properties, fluidity, and transparency may be excellent.

In the present disclosure, the (meth)acrylic acid alkyl ester polymer may be a polymer including a (meth) acrylic acid alkyl ester in an amount of 85 % by weight or more, 90 % by weight or more, or 95 % by weight or more.

In the present disclosure, unless noted otherwise, the "acrylic acid alkyl ester" or the "methacrylic acid alkyl ester" may both mean the "(meth)acrylic acid alkyl ester".

The polymethyl methacrylate resin may include, for example, methyl methacrylate and methyl acrylate. Preferably, 85 to 99 % by weight of methyl methacrylate and 1 to 15 % by weight of methyl acrylate, preferably 90 to 98 % by weight of methyl methacrylate and 2 to 10 % by weight of methyl acrylate, may be included based on the total weight of the polymethyl methacrylate resin. Within this range, gloss, fluidity, and mechanical properties may be improved.

For example, the polymer (b-2) may have a weight average molecular weight of 50,000 to 150,000 g/mol, preferably 60,000 to 130,000 g/mol, more preferably 70,000 g/mol to 110,000 g/mol, still more preferably 70,000 to 100,000 g/mol. Within this range, transparency, gloss, and fluidity may be excellent while maintaining impact resistance.

The polymer (b-2) may have a glass transition temperature of 80 to 130 °C, preferably 90 to 120 °C. Within this range, heat resistance may be excellent.

In the present disclosure, the glass transition temperature may be measured using a differential scanning calorimeter (DSC) according to ASTM D3418. As a specific example, the glass transition temperature may be measured at a heating rate of 10 °C/ min using a differential scanning calorimeter (Q100 DSC, TA Instruments Co.).

For example, the polymer (b-2) may have a flow index of, for example, 15 to 120 g/10 min, preferably 30 to 80 g/10 min, more preferably 40 to 50 g/10 min, as measured at 220 °C under a load of 10 kg according to ASTM D1238. Within this range, processability may be excellent.

For example, the polymer (b-2) may have a refractive index of, for example, 1.480 to 1.500, preferably 1.485 to 1.495, more preferably 1.488 to 1.492. Within this range, transparency may be excellent.

In this disclosure, a refractive index may be measured by a measurement method commonly used in the technical field to which the present invention belongs, and specifically, it may be measured at room temperature (20±5°C) using an Abbe refractometer according to ASTM D542.

For example, the (meth) acrylic acid alkyl ester polymer (b-2) may be prepared by suspension polymerization. Suspension polymerization methods commonly practiced in the art to which the present invention pertains may be used in the present invention without particular limitation.

<u>**(C) Pentaerythritol-based lubricant**</u>

The pentaerythritol-based lubricant (C) may be included in an amount of, for example, 0.3 to 2 parts by weight, preferably 0.3 to 1.7 parts by weight, more preferably 0.5 to 1.5 parts by weight, based on 100 parts by weight of the base resin. Within this range, processability may be equivalent to or higher than that of a conventional material, PVC resin, for calender processing, surface quality may be excellent due to the absence of flow marks, bubbles, and plate out, and calender processing may be performed using existing calendering equipment.

The pentaerythritol-based lubricant (C) may be preferably a compound represented by Formula 1 below. In this case, processability may be equivalent to or higher than that of a conventional material, PVC resin, for calender processing, surface quality may be excellent due to the absence of flow marks, bubbles, and plate out, and calender processing may be performed using existing calendering equipment.

[Formula 1]

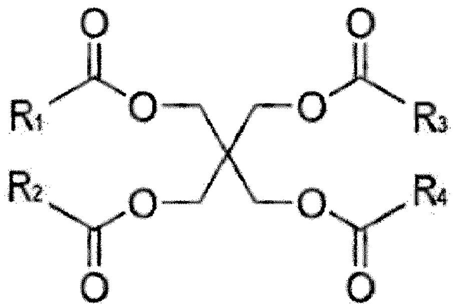

In Formula 1, $R_1$, $R_2$, $R_3$ and $R_4$ are each independently, an alkyl group having 1 to 18 carbon atoms, or an alkyl group having 1 to 18 carbon atoms substituted with 1, 2, or more carboxylic acid groups.

The pentaerythritol-based lubricant (C) may be more preferably a compound and/or complex including pentaerythritol and carboxylic acid. In this case, processability may be equivalent to or higher than that of a conventional material, PVC resin, for calender processing, surface quality may be excellent due to the absence of flow marks, bubbles, and plate out, and calender processing may be performed using existing calendering equipment.

The carboxylic acid may be preferably mono-carboxylic acid, di-carboxylic acid or a mixture thereof.

The carboxylic acid may be, for example, one or more selected from the group consisting of myristic acid, stearic acid, palmitic acid, oleic acid, and linolenic acid, more preferably stearic acid.

The dicarboxylic acid may be, for example, one or more selected from the group consisting of oxalic acid, maleic acid, malic acid, succinic acid, and adipic acid, more preferably adipic acid.

The pentaerythritol-based lubricant (C) may have a melting point of, for example, 100 °C or less, preferably 80 °C or less, more preferably 70 °C or less, even more preferably 65 °C or less, even still more preferably 30 to 65 °C. Within this range, processability may be equivalent to or higher than that of a conventional material, PVC resin, for calender processing, surface quality may be excellent due to the absence of flow marks, bubbles, and plate out, and calender processing may be performed using existing calendering equipment.

In the present disclosure, melting point may be measured using a differential scanning calorimeter 2920 (DSC 2920, TA Co.). As a specific example of measuring melting point, after a DSC is equilibrated at a temperature of 0 °C, the temperature is increased to 180 °C at a rate of 20 °C/ min, the temperature is reduced to -60 °C at a rate of 20 °C/ min, and then the temperature is increased to 180 °C at a rate of 10 °C/ min. At this time, in the second temperature increase section, the melting point is obtained from the top region of an endothermic curve.

The pentaerythritol-based lubricant (C) may have an acid value of, for example, 20 mg KOH/g or less, preferably 17 mg KOH/g or less, more preferably 15 mg KOH/g or less, even more preferably 1 to 15 mg KOH/g, as measured according to ASTM E203. Within this range, processability may be equivalent to or higher than that of a conventional material, PVC resin, for calender processing, surface quality may be excellent due to the absence of flow marks, bubbles, and plate out, and calender processing may be performed using existing calendering equipment.

The pentaerythritol-based lubricant (C) may have a moisture content of, for example, 1.5 % by weight or less, preferably 1 % by weight or less, more preferably 0.01 to 1 % by weight, as measured according to ASTM E203. Within this range, processability may be equivalent to or higher than that of a conventional material, PVC resin, for calender processing, surface quality may be excellent due to the absence of flow marks, bubbles, and plate out, and calender processing may be performed using existing calendering equipment.

The pentaerythritol-based lubricant (C) may have a saponification value of, for example, 220 to 320 mg KOH/g, preferably 240 to 300 mg KOH/g, more preferably 260 to 290 mg KOH/g, even more preferably 270 to 280 mg KOH/g, as measured according to ASTM D97. Within this range, processability may be equivalent to or higher than that of a conventional material, PVC resin, for calender processing, surface quality may be excellent due to the absence of flow marks, bubbles, and plate out, and calender processing may be performed using existing calendering equipment.

The pentaerythritol-based lubricant (C) may have an iodine value of, for example, 2.3 or less, preferably 2.1 or less, more preferably 1 to 2.1, as measured according to American Oil Chemistry Society ("AOCS") method Cd 1-92. Within this range, processability may be equivalent to or higher than that of a conventional material, PVC resin, for calender processing, surface quality may be excellent due to the absence of flow marks, bubbles, and plate out, and calender processing may be performed using existing calendering equipment.

## (D) Glyceryl-based lubricant

The glyceryl-based lubricant (D) may be included in an amount of, for example, 0.1 to 1.5 parts by weight, preferably 0.1 to 1 parts by weight, more preferably 0.1 to 0.7 parts by weight, even more preferably 0.3 to 0.7 parts by weight, based on 100 parts by weight of the base resin. Within this range, synergistic effect with the pentaerythritol-based

lubricant (C) may be expressed, so that processability may be equivalent to or higher than that of a conventional material, PVC resin, for calender processing, and surface quality may be excellent due to the absence of flow marks, bubbles, and plate out. Accordingly, a beautiful appearance may be accomplished, and calender processing may be performed using existing calendering equipment.

The glyceryl-based lubricant (D) may have a molecular weight of, for example, 400 g/mol or less, preferably 100 to 400 g/mol, more preferably 200 to 400 g/mol, even more preferably 300 to 400 g/mol. Within this range, synergistic effect with the pentaerythritol-based lubricant (C) may be expressed, so that processability may be equivalent to or higher than that of a conventional material, PVC resin, for calender processing, and surface quality may be excellent due to the absence of flow marks, bubbles, and plate out. Accordingly, a beautiful appearance may be accomplished, and calender processing may be performed using existing calendering equipment.

In this disclosure, a molecular weight may be measured by GC/MS structural analysis, and specifically, a column is HP-5 (0.32 mm(ID)*30ml, 0.25 $\mu$m d.f. capillary), a gas flow rate (column(He)) is 1 ml/min, an oven temperature is initially 40 °C, and then increased to 330 °C at 10 °C/min after 5 minutes and maintained for 15 minutes, and an injector temperature is 250 °C, a split ratio is 1/120, and an injection amount may be adjusted to 0.2 $\mu\ell$ for measurement.

The glyceryl-based lubricant (D) may have a melting point of, for example, 100 °C or less, preferably 80 °C or less, more preferably 70 °C or less, even more preferably 65 °C or less, even still more preferably 30 to 65 °C. Within this range, synergistic effect with the pentaerythritol-based lubricant (C) may be expressed, so that processability may be equivalent to or higher than that of a conventional material, PVC resin, for calender processing, and surface quality may be excellent due to the absence of flow marks, bubbles, and plate out. Accordingly, a beautiful appearance may be accomplished, and calender processing may be performed using existing calendering equipment.

The glyceryl-based lubricant (D) may be, for example, a glyceryl fatty acid ester compound, preferably one or more selected from the group consisting of glyceryl monostearate, glyceryl monolaurate, glyceryl monooleate, glyceryl monopalmitate, glyceryl monomyristate, glyceryl distearate, glyceryl dilaurate, glyceryl dioleate, glyceryl dipalmitate, and glyceryl dimyristate, more preferably a mixture of glyceryl monostearate and glyceryl monopalmitate. In this case, synergistic effect with the pentaerythritol-based lubricant (C) may be expressed, so that processability may be equivalent to or higher than that of a conventional material, PVC resin, for calender processing, and surface quality may be excellent due to the absence of flow marks, bubbles, and plate out. Accordingly, a beautiful appearance may be accomplished, and calender processing may be performed using existing calendering equipment.

In the mixture of the glyceryl monostearate and glyceryl monopalmitate, a weight ratio of the glyceryl monostearate to glyceryl monopalmitate may be preferably 3:7 to 7:3, more preferably 4:6 to 6:4. Within this range, synergistic effect with the pentaerythritol-based lubricant (C) may be expressed, so that processability may be equivalent to or higher than that of a conventional material, PVC resin, for calender processing, and surface quality may be excellent due to the absence of flow marks, bubbles, and plate out. Accordingly, a beautiful appearance may be accomplished, and calender processing may be performed using existing calendering equipment.

## Thermoplastic resin composition

For example, the thermoplastic resin composition may be roll-milled and extruded to produce a sheet having a thickness of 0.3 mm at a roll temperature of 170 °C, a calendering roll speed of 15 rpm, and a calendering roll gap of 0.28 mm. During the roll-milling and extrusion, a process of plasticizing, coating, and degassing on the surface of a roll surface may be performed within 3 minutes. The molded sheet can be attached and detached from the roll(s) without deformation or damage, thereby exhibiting excellent calender processability.

In this disclosure, the sheet may be any one of a sheet, a film or a foil unless otherwise specified.

For example, the thermoplastic resin composition may be roll-milled and extruded to produce a sheet having a thickness of 0.3 mm at a roll temperature of 170 °C, a calendering roll speed of 15 rpm, and a calendering roll gap of 0.28 mm. When the thermoplastic resin composition was melted for 1 minute, and mixed for 3 minutes, and then stayed for 1 minute, under the roll-milling and extrusion conditions, plate out may not occur based on visual observation, resulting in appearance quality improvement.

For example, when the thermoplastic resin composition is manufactured into a sheet by calender processing, bubbles may be not generated in the sheet based on visual observation, resulting in appearance quality improvement.

The thermoplastic resin composition may have a Rockwell hardness of, for example, 78 or more, preferably 81 or more, more preferably 81 to 115, as measured by R-scale according to ASTM D785. Within this range, property balance and scratch resistance may be excellent.

When necessary, based on 100 parts by weight of the base resin, the thermoplastic resin composition may include 0.01 to 5 parts by weight, 0.05 to 3 parts by weight, 0.1 to 2 parts by weight, or 0.5 to 1 part by weight of each of one or more selected from the group consisting of a heat stabilizer, a dye, a pigment, a colorant, an antistatic agent, an antibacterial agent, a processing aid, a metal deactivator, a flame retardant, a smoke suppressant, an anti-drip agent, an anti-friction agent, and an anti-wear agent. Within this range, the required physical properties of the thermoplastic resin

composition of the present invention may be implemented without deterioration in the intrinsic physical properties thereof.

The heat stabilizer may preferably include a first heat stabilizer, a second heat stabilizer or a mixture thereof.

For example, the first heat stabilizer may be a phenolic heat stabilizer. Preferably, the first heat stabilizer may include one or more selected from the group consisting of 2-t-butyl-6-(3-t-butyl-2-hydroxy-5-methylbenzyl)-4-methylpheny l acrylate, 2-[1-(2-hydroxy-3,5-di-t-pentylphenyl)ethyl]-4,6-di-t-pentylph enyl acrylate, 1,6-hexanediolbis-[3-(3,5-di-t-butyl-4-hydroxyphenyl)propionat e], 2,2-thiodiethylenebis-[3-(3,5-di-t-butyl-4-hydroxyphenyl)propi onate], 3,5-di-t-butyl-4-hydroxybenzylphosphonatediethyl ester, tris(2,6-dimethyl-3-hydroxy-4-t-butylbenzyl)isocyanurate, tris(3,5-di-t-butyl-4-hydroxybenzyl)isocyanurate, tris[(3,5-di-t-butyl-4-hydroxyphenyl)propionyloxyethyl]isocyan urate, tris(4-t-butyl-2,6-dimethyl-3-hydroxybenzyl)isocyanurate, 2,2'-methylenebis(4-methyl-6-t-butylphenol)terephthalate, 1,3,5-trimethyl-2,4,6-tris(3,5-di-t-butyl-4-hydroxybenzyl)benz ene, 3,9-bis[1,1-dimethyl-2-{β-(3-t-butyl-4-hydroxy-5-methyl-phenyl )propionyloxy}ethyl]-2,4,8,10-tetraoxaspiro[5,5]undecane, 2,2-bis[4-(2-3,5-di-t-butyl-4-hydroxyhydrocinnamoyloxy) ethoxyp henyl]propane, and β-(3,5-di-t-butyl-4-hydroxyphenyl)propionic acid stearyl ester, more preferably octadecyl 3-(3,5-di-tert-butyl-4-hydroxyphenyl)propanoate (IR1076).

For example, the second heat stabilizer may be a phosphorus heat stabilizer. Preferably, the second heat stabilizer may include one or more selected from the group consisting of bis(dialkylphenyl)pentaerythritol diphosphite ester, phosphite ester, trioctylphosphite, trilaurylphosphite, tridecylphosphite, (octyl)diphenyl phosphite, tris (2,4-di-t-butylphenyl) phosphite, triphenyl phosphite, tris(butoxyethyl) phosphite, tris(nonylphenyl) phosphite, distearylpentaerythritol diphosphite, tetra(tridecyl)-1,1,3-tris(2-methyl-5-t-butyl-4-hydroxy-phenyl )butane diphosphite, tetra(C12-C15 mixed alkyl)-4,4'-isopropylidenediphenyl diphosphite, tetra(tridecyl)-4,4'-butylidenebis(3-methyl-6-t-butylphenol)di phosphite, tris(mono- and di-mixed nonylphenyl)phosphite, hydrogenated-4,4'-isopropylidenediphenol polyphosphite, phenyl (4,4'-isopropylidenediphenol)pentaerythritol diphosphite, distearylpentaerythritol diphosphite, tris[4,4'-isopropylidenebis(2-t-butylphenol)] phosphite, di(isodecyl)phenyl phosphite, 4,4'-isopropylidenebis(2-t-butylphenol)bis(nonylphenyl) phosphite, bis(2,4-di-t-butyl-6-methylphenyl)ethyl phosphite, 2-[{2,4,8,10-tetra-t-butyldibenz[d,f][1.3.2]-dioxaphospepin-6 -yl}oxy]-N,N-bis[2-[{2,4,8,10-tetra-t-butyl-dibenz[d,f][1.3.2] -dioxaphospepin-6-yl}oxy]ethyl]-ethana mine, and 6-[3-(3-t-butyl-4-hydroxy-5-methylphenyl)propoxy]-2,4,8,10-tet ra-t-butyldibenz[d,f][1.3.2]-dioxaphospepin, more preferably tris(2,4-di-tert-butylphenyl) phosphite (IF168).

## Method of preparing thermoplastic resin composition

A method of preparing the thermoplastic resin composition of the present disclosure includes kneading and extruding 100 parts by weight of a base resin including 25 to 75 % by weight of one or more copolymers (A) selected from the group consisting of a copolymer (a-1) including an alkyl acrylate rubber having an average particle diameter of 50 to 150 nm, an aromatic vinyl compound and a vinyl cyanide compound, a copolymer (a-2) including an alkyl acrylate rubber having an average particle diameter of greater than 150 nm and 600 nm or less, an aromatic vinyl compound and a vinyl cyanide compound, and a copolymer (a-3) including an alkyl acrylate rubber having an average particle diameter of 50 nm to 120 nm, an aromatic vinyl compound and a vinyl cyanide compound, and 25 to 75 % by weight of one or more matrix resins (B) selected from the group consisting of an aromatic vinyl compound-vinyl cyanide compound copolymer (b-1) and a (meth)acrylic acid alkyl ester polymer (b-2); and (C) 0.3 to 2 parts by weight of a pentaerythritol-based lubricant, under conditions of 200 to 300 °C and 100 to 500 rpm, where the copolymer (a-3) has an alkyl acrylate coverage (X) value of 65 % by weight or more as calculated by Equation 1 below.

[Equation 1]

$$X = \{(G-Y)/Y\} * 100$$

(In Equation 1, G represents a gel content (wt%) based on the total weight of the copolymer (A), and Y represents an alkyl acrylate content (wt%) in a gel based on the total weight of the copolymer (A).)

In addition, the method of preparing the thermoplastic resin composition of the present disclosure includes kneading and extruding 100 parts by weight of a base resin including 25 to 75 % by weight of one or more graft copolymers (A) selected from the group consisting of an alkyl acrylate-aromatic vinyl compound-vinyl cyanide compound graft copolymer (a-1) including an alkyl acrylate rubber having an average particle diameter of 50 to 150 nm, an alkyl acrylate-aromatic vinyl compound-vinyl cyanide compound graft copolymer (a-2) including an alkyl acrylate rubber having an average particle diameter of greater than 150 nm and 600 nm or less, and an alkyl acrylate-an aromatic vinyl compound-vinyl cyanide compound graft copolymer (a-3) including an alkyl acrylate rubber having an average particle diameter of 50 nm to 120 nm, and 25 to 75 % by weight of one or more matrix resins (B) selected from the group consisting of an aromatic vinyl compound-vinyl cyanide compound copolymer (b-1) and a (meth)acrylic acid alkyl ester polymer (b-2); and 0.3 to 2 parts by weight of a pentaerythritol-based lubricant (C), under conditions of 200 to 300 °C and 100 to 500 rpm, wherein the

graft copolymer (a-3) has an alkyl acrylate coverage (X) value of 65 % by weight or more as calculated by Equation 1 below. In this case, compared to conventional ASA resin compositions, the mechanical properties and weather resistance are maintained at the same level, while flow marks and bubbles do not occur and mold deposits are significantly reduced, resulting in excellent appearance quality. It may be processed using existing calendaring equipment and has excellent calender processability.

[Equation 1]

$$X = \{(G-Y)/Y\} * 100$$

In Equation 1, G represents a gel content (wt%) based on the total weight of the graft copolymer, and Y represents an alkyl acrylate content (wt%) in a gel based on the total weight of the graft copolymer.

The method of preparing the thermoplastic resin composition may further include, for example, a glyceryl-based lubricant (D) in an amount of 0.3 to 1.5 parts by weight, preferably 0.1 to 1 parts by weight, more preferably 0.1 to 0.7 parts by weight, even more preferably 0.3 to 0.7 parts by weight, based on 100 parts by weight of the base resin. Within this range, synergistic effect with the pentaerythritol-based lubricant (C) may be expressed, so that mechanical properties and weather resistance may be equivalent to or higher than that of a conventional material, PVC resin, for calender processing, and appearance quality may be excellent due to significant reduction of flow marks, bubbles, and plate out. Accordingly, calender processing may be performed using existing calendering equipment, and calender processability may be excellent.

The method of preparing the thermoplastic resin composition shares all the technical characteristics of the above-described thermoplastic resin composition. Accordingly, repeated description thereof will be omitted.

The kneading and extruding may be performed at preferably 200 to 300 °C, more preferably 210 to 260 °C, still more preferably 220 to 250 °C using an extruder. Within this range, extrusion may be performed stably and kneading may be performed efficiently. At this time, the temperature is a temperature set in a cylinder.

For example, the kneading and extruding may be performed at a screw rotation rate of 100 to 500 rpm, preferably 150 to 450 rpm, more preferably 200 to 400 rpm. In this case, due to appropriate throughput per unit time, process efficiency may be excellent.

For example, the thermoplastic resin composition obtained by extrusion may be prepared in pellets using a pelletizer.

Extruders commonly used in the art to which the present invention pertains may be used without particular limitation, and a twin-screw extruder is preferably used.

## Molded article

A molded article of this disclosure includes the thermoplastic resin composition. In this case, processability may be equivalent to or higher than that of a conventional material, PVC resin, for calender processing, surface quality may be excellent due to the absence of flow marks, bubbles, and plate out, and calender processing may be performed using existing calendering equipment.

The calendar molded article may be preferably a film, a sheet, or foil, and specifically a deco sheet for furniture finishing, a finishing material for outdoor building materials, a finishing material for roofs, an interior film, wallpaper, an edge band, a vinyl-coated metal (VCM), a flooring material, plastic-steel-plastic (PSP) for molding, or a wrapping film.

A method of manufacturing the molded article preferably includes kneading and extruding 100 parts by weight of a base resin including 25 to 75 % by weight of one or more copolymers (A) selected from the group consisting of a copolymer (a-1) including an alkyl acrylate rubber having an average particle diameter of 50 to 150 nm, an aromatic vinyl compound and a vinyl cyanide compound, a copolymer (a-2) including an alkyl acrylate rubber having an average particle diameter of greater than 150 nm and 600 nm or less, an aromatic vinyl compound and a vinyl cyanide compound, and a copolymer (a-3) including an alkyl acrylate rubber having an average particle diameter of 50 nm to 120 nm, an aromatic vinyl compound and a vinyl cyanide compound, and 25 to 75 % by weight of one or more matrix resins (B) selected from the group consisting of an aromatic vinyl compound-vinyl cyanide compound copolymer (b-1) and a (meth)acrylic acid alkyl ester polymer (b-2); and (C) 0.3 to 2 parts by weight of a pentaerythritol-based lubricant, under conditions of 200 to 300 °C and 100 to 500 rpm to prepare an extrudate; and molding the extrudate to manufacture a molded article, wherein the copolymer (a-3) has an alkyl acrylate coverage (X) value of 65 % by weight or more as calculated by Equation 1 below. In this case, processability may be equivalent to or higher than that of a conventional material, PVC resin, for calender processing, surface quality may be excellent due to the absence of flow marks, bubbles, and plate out, and calender processing may be performed using existing calendering equipment.

[Equation 1]

$$X = \{(G-Y)/Y\} * 100$$

(In Equation 1, G represents a gel content (wt%) based on the total weight of the copolymer (A), and Y represents an alkyl acrylate content (wt%) in a gel based on the total weight of the copolymer (A).)

In addition, the method of manufacturing the molded article preferably includes kneading and extruding 100 parts by weight of a base resin including 25 to 75 % by weight of one or more graft copolymers (A) selected from the group consisting of an alkyl acrylate-aromatic vinyl compound-vinyl cyanide compound graft copolymer (a-1) including an alkyl acrylate rubber having an average particle diameter of 50 to 150 nm, an alkyl acrylate-aromatic vinyl compound-vinyl cyanide compound graft copolymer (a-2) including an alkyl acrylate rubber having an average particle diameter of greater than 150 nm and 600 nm or less, and an alkyl acrylate-an aromatic vinyl compound-vinyl cyanide compound graft copolymer (a-3) including an alkyl acrylate rubber having an average particle diameter of 50 nm to 120 nm, and 25 to 75 % by weight of one or more matrix resins (B) selected from the group consisting of an aromatic vinyl compound-vinyl cyanide compound copolymer (b-1) and a (meth)acrylic acid alkyl ester polymer (b-2); and 0.3 to 2 parts by weight of a pentaerythritol-based lubricant (C), under conditions of 200 to 300 °C and 100 to 500 rpm to prepare an extrudate; and molding the extrudate to manufacture a molded article, wherein the graft copolymer (a-3) has an alkyl acrylate coverage (X) value of 65 % by weight or more as calculated by Equation 1 below. In this case, processability may be equivalent to or higher than that of a conventional material, PVC resin, for calender processing, surface quality may be excellent due to the absence of flow marks, bubbles, and plate out, and calender processing may be performed using existing calendering equipment.

[Equation 1]

$$X = \{(G-Y)/Y\} * 100$$

In Equation 1, G represents a gel content (wt%) based on the total weight of the graft copolymer, and Y represents an alkyl acrylate content (wt%) in a gel based on the total weight of the graft copolymer.

For example, the extrudate may have a pellet shape or a plate shape.

In the present disclosure, the plate shape is not particularly limited as long as the plate shape is generally defined as a plate shape in the art to which the present invention pertains. For example, the plate shape may include a flat shape, a sheet shape, a film shape, and a foil shape.

In describing the thermoplastic resin composition of the present invention, the method of preparing the same, and the molded article including the same, it should be noted that other conditions or equipment not explicitly described herein may be appropriately selected within the range commonly practiced in the art without particular limitation.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Examples]

The materials used in Examples and Comparative Examples below are as follows.

* (a-1) ASA graft copolymer containing an alkyl acrylate rubber having an average particle diameter of 50 to 150 nm: An ASA graft copolymer (rubber (core): 50 % by weight of butyl acrylate, shell: 37.5 % by weight of styrene and 12.5 % by weight of acrylonitrile, grafting degree: 35%) prepared by emulsion polymerization and containing an alkyl acrylate rubber with an average particle diameter of 130 nm.
* (a-2) ASA graft copolymer containing an alkyl acrylate rubber having an average particle diameter of greater than 150 nm and 600 nm or less: An ASA graft copolymer (rubber (core): 50 % by weight of butyl acrylate, shell: 37.5 % by weight of styrene and 12.5 % by weight of acrylonitrile, grafting degree: 50 %) prepared by emulsion polymerization and containing an alkyl acrylate rubber with an average particle diameter of 350 nm.
* (a-3) ASA graft copolymer containing an alkyl acrylate rubber having an average particle diameter of 50 to 120 nm: An ASA graft copolymer (rubber (core): 36 % by weight of butyl acrylate, 7 % by weight of styrene, shell: 4 % by weight of butyl acrylate, 39.5 % by weight of styrene and 13.5 % by weight of acrylonitrile, alkyl acrylate coverage value: 99 %

by weight, grafting degree: 77 %) prepared by emulsion polymerization and containing an alkyl acrylate rubber with an average particle diameter of 70 nm.

* (b-1-1) SAN resin having an Mw of 120,000 mol: Styrene-acrylonitrile copolymer (acrylonitrile 27 % by weight)
* (b-1-2) SAN resin having an Mw of 170,000 mol: Styrene-acrylonitrile copolymer (acrylonitrile 30 % by weight)
* (b-2) PMMA resin prepared by suspension polymerization: Polymethyl methacrylate resin (weight average molecular weight: 80,000 g/mol, flow index (220 °C, 10 kg): 45 g/10 min, refractive index: 1.490)
* (C-1) Pentaerythritol-based lubricant: pentaerythritol adipate stearate (melting point: 57 °C, acid value: 15 mg KOH/g or less, saponification degree: 278 mg KOH/g)
* (C-2) EBA: Ethylene bis stearamide
* (C-3) St-acid: Stearic acid
* (C-4) Ethylene glycol dipalmitate
* (D) Glyceryl-based lubricant: Mixture of glyceryl monostearate (molecular weight: 358 g/mol) and glyceryl monopalmitate (molecular weight: 345 g/mol) (weight ratio: 1:1)

Examples 1 to 8 and Comparative Examples 1 to 7

According to the contents shown in Tables 1 and 2, the components shown in Tables 1 and 2 were fed into a twin-screw extruder. Then, melt-kneading and extrusion were performed at 230 °C and 150 rpm to prepare pellets. The prepared pellets were injection-molded at 220 °C to manufacture injection-molded specimens.

In addition, using a roll mill (MR-LM0820, Mirae RPM Co.) in which two calender rolls having a diameter of 30 cm were installed at an interval of 0.3 mm, calendering of the pellets was performed while maintaining the temperature of the rolls at 180 °C to obtain a sheet having a thickness of 0.3 mm.

[Test Examples]

The properties of the pellets, injection-molded specimens or sheets prepared in Examples 1 to 8 and Comparative Examples 1 to 7 were measured according to the following methods, and the results are shown in Tables 1 and 2 below.

**Measurement methods**

* Alkyl acrylate coverage value (X value, wt%) of graft copolymer (a-3): The alkyl acrylate coverage value of the graft copolymer (a-3) was calculated by Equation 1 below.

[Equation 1]

$$X = \{(G-Y)/Y\} * 100$$

In Equation 1, G represents a gel content (wt%) based on the total weight of the graft copolymer, and Y represents an alkyl acrylate content (wt%) in a gel based on the total weight of the graft copolymer.

Here, the alkyl acrylate content in the gel was quantitatively calculated using an $^1$NMR analyzer or FT-IR. Specific measurement conditions are as follows.

$^1$H NMR

- Equipment name: Bruker 600MHz NMR (AVANCE III HD) CPP BB(1H 19F tunable and broadband, with z-gradient) Prodigy Probe
- Measurement conditions: 1H NMR (zg30): ns=32, d1=5s, TCE-d2, at room temp.

FT-IR

- Equipment name: Agilent Cary 66
- Measurement conditions: ATR mode

* Gel content (%): 1 g of graft copolymer was added to 30 ml of acetone, followed by stirring at 210 rpm and room temperature using an orbital shaker (equipment name: Lab companion SKC-6075) for 12 hours. Then, centrifugation was performed at 0 °C and 18,000 rpm for 3 hours using a centrifuge (Supra R30, Hanil Science Co.) to separate insoluble matter that was not dissolved in acetone, followed by drying in a forced convection oven (equipment name: Lab companion OF-12GW) set to 85 °C for 12 hours via forced circulation. Then, the weight of the insoluble matter was measured, and the gel content was calculated by Equation 3 below.

Gel content (wt%) = [Weight (g) of insoluble matter (gel)/Weight (g) of sample] x 100 [Equation 3]

**[361]** * Grafting degree (%): 0.5 g of dried graft copolymer powder was added to 50 ml of acetone, agitation was performed at room temperature for 12 hours, centrifugation was performed to separate only insoluble matter that was not dissolved in acetone, and the separated insoluble matter was dried for 12 hours. Then, the weight of the dried insoluble matter was measured, and the grafting degree was calculated by Equation 2 below.

grafting degree (%) = [Weight (g) of grafted monomers/Weight (g) of rubber]*100 [Equation 2]

In Equation 2, the weight (g) of grafted monomers is obtained by subtracting the weight (g) of rubber from the weight (g) of insoluble matter (gel) obtained by dissolving the graft copolymer in acetone and performing centrifugation, and the weight (g) of rubber is the weight (g) of rubber components theoretically added to graft copolymer powder.

As a specific measurement example, when measuring the weight (g) of insoluble matter (gel), 0.5 g of dried graft copolymer powder was added to 50 ml of acetone, followed by stirring at 210 rpm and room temperature using an orbital shaker (equipment name: Lab companion SKC-6075) for 12 hours. Then, centrifugation was performed at 0 °C and 18,000 rpm for 3 hours using a centrifuge (Supra R30, Hanil Science Co.) to separate insoluble matter that was not dissolved in acetone, followed by drying in a forced convection oven (equipment name: Lab companion OF-12GW) set to 85 °C for 12 hours via forced circulation. Then, the weight of the insoluble matter (gel) was measured.

* Plate out: Thermoplastic resin composition pellets were roll-milled and extruded to produce a sheet having a thickness of 0.3 mm at a roll temperature of 170 °C, a calendering roll speed of 15 rpm, and a calendering roll gap of 0.28 mm. Under the roll-milling and extrusion conditions, it was melted for 1 minute, and mixed for 3 minutes, and then stayed for 1 minute. Then the sheet was observed with the naked eye whether plate out occurred, and it was evaluated as follows.

Satisfactory: no plate out
Occurred: Plate out occurred

* Flow marks: The degree of occurrence of flow marks on the manufactured sheets was observed with the naked eye and evaluated as follows:

★★★: No flow mark
★★☆: Some flow marks occurred
★☆☆: Large number of flow marks occurred

* Roll adhesion: The thermoplastic resin composition pellets were roll-milled and extruded to produce a sheet having a thickness of 0.3 mm at a roll temperature of 170 °C, a calendering roll speed of 15 rpm, and a calendering roll gap of 0.28 mm. During the roll-milling and extrusion, processability was evaluated as excellent if a stabilization process of plasticizing, coating, and degassing the thermoplastic resin composition on the surface of roll(s) was performed within 3 minutes, and it could be attached to and detached from the roll(s) without deformation or damage to the molded sheet.

***: Excellent processability
***: Average processability
★☆☆: Poor processability

* Hardness: Rockwell hardness was measured by R-scale according to ASTM D785.

* Occurrence of migration after long-term storage: After calender-processed sheets with a width of 10 cm were stored in roll form at 25°C and a humidity of 50 RH% for 5 months, whether migration of a lubricant to the surface of the sheet occurred was observed with the naked eye. If no migration occurred, it was marked as "X", and if migration occurred, it was marked as "o".

[Table 1]

| Classific ation | Examp le 1 | Examp le 2 | Examp le 3 | Examp le 4 | Examp le 5 | Examp le 6 | Examp le 7 | Examp le 8 |
|---|---|---|---|---|---|---|---|---|
| (a-1) | | 12 | | | | | | |
| (a-2) | | 26 | | | | | | |
| (a-3) | 55 | | 65 | 55 | 55 | 55 | 50 | 55 |
| (b-1-1) | 35 | 40 | | 35 | 35 | 30 | 35 | 20 |
| (b-1-2) | 10 | 22 | | 10 | 10 | 15 | 15 | 25 |
| (b-2) | | | 35 | | | | | |
| (C-1) | 1 | 1 | 1 | 0.5 | 1.5 | 0.8 | 1 | 1 |
| (C-2) | | | | | | | | |
| (C-3) | | | | | | | | |
| (C-4) | | | | | | | | |
| (D) | 0.5 | 0.5 | 0.1 | 0.5 | 0 | 0 | 0.5 | 0.5 |
| X value (% by weight) of (a-3) | 99 | - | 99 | 99 | 99 | 99 | 99 | 99 |
| Physical properties | | | | | | | | |
| Plate out | Satis facto ry | Satis facto ry | Satis facto ry | Satis facto ry | Satis facto ry | Satis facto ry | Satis facto ry | Satis facto ry |
| Flow marks | ★★★ | ★★★ | ★★☆ | ★★★ | ★★☆ | ★★☆ | ★★★ | ★★★ |
| Bubbles | Satis facto ry | Satis facto ry | Satis facto ry | Satis facto ry | Satis facto ry | Satis facto ry | Satis facto ry | Satis facto ry |
| Roll adhesion | ★★★ | ★★★ | ★★☆ | ★★★ | ★★☆ | ★★☆ | ★★★ | ★★★ |
| Hardness | 81.5 | 100.1 | 83.6 | 80.4 | 79.9 | 81.8 | 84.7 | 81.7 |
| Occurrenc e of migra-tion after long-term sto-rage | X | X | X | X | X | X | X | X |

[Table 2]

| Classific ation | Compar ative Exampl e 1 | Compar ative Exampl e 2 | Compar ative Exampl e 3 | Compar ative Exampl e 4 | Compar ative Exampl e 5 | Compar ative Exampl e 6 | Compar ative Exampl e 7 |
|---|---|---|---|---|---|---|---|
| (a-1) | | | | | | | |
| (a-2) | | | | | | | |
| (a-3) | 55 | 55 | 55 | 55 | 55 | 20 | 85 |
| (b-1-1) | 35 | 35 | 35 | 35 | 35 | 80 | 15 |
| (b-1-2) | 10 | 10 | 10 | 10 | 10 | | |
| (b-2) | | | | | | | |

(continued)

| Classific ation | Compar ative Exampl e 1 | Compar ative Exampl e 2 | Compar ative Exampl e 3 | Compar ative Exampl e 4 | Compar ative Exampl e 5 | Compar ative Exampl e 6 | Compar ative Exampl e 7 |
|---|---|---|---|---|---|---|---|
| (C-1) | | | | 0.1 | 3 | 1 | 1 |
| (C-2) | | | 1 | | | | |
| (C-3) | | 1 | | | | | |
| (C-4) | 2.5 | | | | | | |
| (D) | 0.5 | 0.5 | 0.1 | | | 0.5 | 0.5 |
| X value (% by weight) of (a-3) | 99 | 99 | 99 | 99 | 99 | 99 | 99 |
| Physical properties | | | | | | | |
| Plate out | Occurr ed | Satisf actory | Occurr ed | Occurr ed | Satisf actory | - | Satisf actory |
| flow marks | ★★☆ | ★☆☆ | ★☆☆ | ★☆☆ | ★★☆ | - | ★★★ |
| bubbles | Satisf actory | Poor | Poor | Poor | Satisf ac-tory | - | Satisf ac-tory |
| Roll adhesion | ★★☆ | ★☆☆ | ★☆☆ | ★☆☆ | ★★☆ | - | ★★★ |
| Hardness | 81.2 | 81.7 | 81.8 | 82.5 | 77.9 | 118.4 | 35.9 |
| Occurrenc e of migration after long-term storage | X | X | X | X | ○ | X | X |

(In Tables 1 and 2, the content of each of (a-1), (a-2), (b-1-1), (b-1-2) and (b-2) is given in % by weight based on the total weight of (a-1), (a-2), (b-1-1), (b-1-2) and (b-2), and the content of each of (C-1), (C-2), (C-3), (C-4) and (D) is given in parts by weight based on 100 parts by weight in total of (C-1), (C-2), (C-3), (C-4) and (D).)

As shown in Tables 1 to 2, the thermoplastic resin compositions of Examples 1 to 8 according to the present invention did not exhibit plate out, flow marks and bubbles, indicating that appearance quality is excellent, and processability was also excellent, compared to Comparative Examples 1 to 7. Here, Examples 1 to 4, 7, and 8 including the glyceryl-based lubricant (D) showed reduced occurrence of flow marks and superior roll adhesion and hardness.

On the other hand, Comparative Example 1 containing ethylene glycol dipalmitate (C-4) showed plate out and flow marks, resulting in a deterioration in appearance quality.

In addition, Comparative Example 2 containing stearic acid (C-3) had poor appearance quality due to the occurrence of flow marks and bubbles, and had poor roll adhesion.

In addition, Comparative Example 3 containing EBA (C-2) had poor appearance quality due to the occurrence of plate out, flow marks and bubbles, and had poor roll adhesion.

In addition, Comparative Example 4 containing a small amount of a pentaerythritol-based lubricant (C-1) showed plate out, bubbles and flow marks, whereas Comparative Example 5 containing an excessive amount of the pentaerythritol-based lubricant (C-1) showed migration of a lubricant to the sheet surface after long-term storage.

In addition, Comparative Example 6 containing a small amount of the graft copolymer (A) and an excessive amount of the matrix resin (B) could not be subjected to calender-process, whereas Comparative Example 7 containing an excessive amount of the graft copolymer (A) and a small amount of the matrix resin (B) showed a significant decrease in hardness.

In conclusion, according to the present invention, when a base resin including one or more copolymers of three types of copolymers including alkyl acrylate containing alkyl acrylate rubbers having different average particle diameters, an aromatic vinyl compound and a vinyl cyanide compound, and one or more matrix resins of an aromatic vinyl compound-vinyl cyanide compound copolymer and a (meth)acrylic acid alkyl ester polymer was added with a pentaerythritol-based lubricant in a predetermined content, and, further, the alkyl acrylate coverage value of the copolymer including the alkyl acrylate containing the alkyl acrylate rubber, the aromatic vinyl compound and the vinyl cyanide compound was adjusted to a predetermined range, processability was equivalent to or higher than that of PVC resin, a conventional material for

calender processing, surface quality was excellent due to the absence of flow marks, bubbles, and plate out, and it was capable of calender processing using existing calendering equipment.

## Claims

1. A thermoplastic resin composition, comprising: 100 parts by weight of a base resin including 25 to 75 % by weight of one or more copolymers (A) selected from the group consisting of a copolymer (a-1) including an alkyl acrylate rubber having an average particle diameter of 50 to 150 nm, an aromatic vinyl compound and a vinyl cyanide compound, a copolymer (a-2) including an alkyl acrylate rubber having an average particle diameter of greater than 150 nm and 600 nm or less, an aromatic vinyl compound and a vinyl cyanide compound, and a copolymer (a-3) including an alkyl acrylate rubber having an average particle diameter of 50 nm to 120 nm, an aromatic vinyl compound and a vinyl cyanide compound, and 25 to 75 % by weight of one or more matrix resins (B) selected from the group consisting of an aromatic vinyl compound-vinyl cyanide compound copolymer (b-1) and a (meth)acrylic acid alkyl ester polymer (b-2); and (C) 0.3 to 2 parts by weight of a pentaerythritol-based lubricant,

   wherein the copolymer (a-3) has an alkyl acrylate coverage (X) value of 65 % by weight or more as calculated by Equation 1 below:

   [Equation 1]

   $$X = \{(G-Y)/Y\} * 100$$

   where G represents a gel content (wt%) based on a total weight of the copolymer (A), and Y represents an alkyl acrylate content (wt%) in a gel based on the total weight of the copolymer (A).

2. The thermoplastic resin composition according to claim 1, wherein the copolymer (a-1), the copolymer (a-2) and/or the copolymer (a-3) is a graft copolymer.

3. The thermoplastic resin composition according to claim 1, wherein the pentaerythritol-based lubricant (C) has a melting point of 100 °C or less.

4. The thermoplastic resin composition according to claim 1, wherein the thermoplastic resin composition further comprises 0.3 to 1.5 parts by weight of a glyceryl-based lubricant (D) based on 100 parts by weight of the base resin.

5. The thermoplastic resin composition according to claim 4, wherein the glyceryl-based lubricant (D) has a molecular weight of 400 g/mol or less.

6. The thermoplastic resin composition according to claim 1, wherein the copolymer (a-1) comprises 35 to 65 % by weight of an alkyl acrylate rubber, 20 to 55 % by weight of an aromatic vinyl compound and 3 to 25 % by weight of a vinyl cyanide compound based on a total weight of the copolymer (a-1).

7. The thermoplastic resin composition according to claim 1, wherein the copolymer (a-2) comprises 35 to 65 % by weight of an alkyl acrylate rubber, 20 to 55 % by weight of an aromatic vinyl compound and 3 to 25 % by weight of a vinyl cyanide compound based on a total weight of the copolymer (a-2).

8. The thermoplastic resin composition according to claim 1, wherein the copolymer (a-3) has a grafting degree of 60 % or more, as calculated by Equation 2 below:

   Grafting degree (%)=[Weight (g) of grafted monomers/Weight (g) of rubber]*100 [Equation 2]

   where the weight (g) of grafted monomers is obtained by subtracting the weight (g) of rubber from the weight (g) of insoluble matter (gel) obtained by dissolving the copolymer in acetone and performing centrifugation, and the weight (g) of rubber is a weight (g) of rubber components theoretically added to copolymer powder.

9. The thermoplastic resin composition according to claim 1, wherein the copolymer (a-3) comprises 20 to 60 % by weight of an alkyl acrylate rubber; and 40 to 80 % by weight of an aromatic vinyl compound-vinyl cyanide compound

copolymer surrounding the alkyl acrylate rubber based on a total weight of the copolymer (a-3).

**10.** The thermoplastic resin composition according to claim 1, wherein the aromatic vinyl compound-vinyl cyanide compound copolymer (b-1) is one or more selected from the group consisting of an aromatic vinyl compound-vinyl cyanide compound copolymer having a weight average molecular weight of 100,000 to 150,000 g/mol and an aromatic vinyl compound-vinyl cyanide compound copolymer having a weight average molecular weight of greater than 150,000 g/mol and 200,000 g/mol or less.

**11.** The thermoplastic resin composition according to claim 1, wherein the (meth) acrylic acid alkyl ester polymer (b-2) comprises one or more selected from the group consisting of a (meth)acrylic acid methyl ester, a (meth)acrylic acid ethyl ester, a (meth) acrylic acid propyl ester, a (meth) acrylic acid 2-ethyl hexyl ester, a (meth) acrylic acid decyl ester, and a (meth) acrylic acid lauryl ester.

**12.** The thermoplastic resin composition according to claim 1, wherein the polymer (b-2) has a weight average molecular weight of 50,000 to 150,000 g/mol.

**13.** A method of preparing a thermoplastic resin composition, the method comprising: kneading and extruding 100 parts by weight of a base resin including 25 to 75 % by weight of one or more copolymers (A) selected from the group consisting of a copolymer (a-1) including an alkyl acrylate rubber having an average particle diameter of 50 to 150 nm, an aromatic vinyl compound and a vinyl cyanide compound, a copolymer (a-2) including an alkyl acrylate rubber having an average particle diameter of greater than 150 nm and 600 nm or less, an aromatic vinyl compound and a vinyl cyanide compound, and a copolymer (a-3) including an alkyl acrylate rubber having an average particle diameter of 50 nm to 120 nm, an aromatic vinyl compound and a vinyl cyanide compound, and 25 to 75 % by weight of one or more matrix resins (B) selected from the group consisting of an aromatic vinyl compound-vinyl cyanide compound copolymer (b-1) and a (meth)acrylic acid alkyl ester polymer (b-2); and (C) 0.3 to 2 parts by weight of a pentaerythritol-based lubricant; under conditions of 200 to 300 °C and 100 to 500 rpm,

wherein the copolymer (a-3) has an alkyl acrylate coverage (X) value of 65 % by weight or more as calculated by Equation 1 below:

[Equation 1]

$$X = \{(G-Y)/Y\} * 100$$

where G represents a gel content (wt%) based on a total weight of the copolymer (A), and Y represents an alkyl acrylate content (wt%) in a gel based on the total weight of the copolymer (A).

**14.** A molded article comprising the thermoplastic resin composition of any one of claims 1 to 12.

**INTERNATIONAL SEARCH REPORT**

International application No.
**PCT/KR2024/011519**

**A. CLASSIFICATION OF SUBJECT MATTER**

**C08L 51/04**(2006.01)i; **C08L 25/12**(2006.01)i; **C08K 5/10**(2006.01)i; **C08K 5/053**(2006.01)i

According to International Patent Classification (IPC) or to both national classification and IPC

**B. FIELDS SEARCHED**

Minimum documentation searched (classification system followed by classification symbols)

C08L 51/04(2006.01); C08F 212/08(2006.01); C08L 25/04(2006.01); C08L 25/12(2006.01); C08L 33/12(2006.01); C08L 51/06(2006.01); C08L 55/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 알킬 아크릴레이트-방향족비닐 화합물-비닐시안 화합물 그라프트 공중합체 (alkyl acrylate-aromatic vinyl compound-vinyl cyan compound graft copolymer, ASA), 방향족비닐 화합물-비닐시안 화합물 공중합체(aromatic vinyl compound-vinyl cyan compound copolymer, SAN), 펜타에리트리톨 (pentaerythritol)

**C. DOCUMENTS CONSIDERED TO BE RELEVANT**

| Category* | Citation of document, with indication, where appropriate, of the relevant passages | Relevant to claim No. |
|---|---|---|
| X | KR 10-2022-0106409 A (LG CHEM, LTD.) 29 July 2022 (2022-07-29) See claims 1-14; paragraphs [0053]-[0217]; and table 1. | 1-14 |
| A | KR 10-2022-0020770 A (LG CHEM, LTD.) 21 February 2022 (2022-02-21) See claims 1-12. | 1-14 |
| A | KR 10-2019-0073323 A (LOTTE ADVANCED MATERIALS CO., LTD.) 26 June 2019 (2019-06-26) See claims 1-14. | 1-14 |
| A | KR 10-2009-0073702 A (CHEIL INDUSTRIES INC.) 03 July 2009 (2009-07-03) See claims 1-14. | 1-14 |
| A | KR 10-2018-0023492 A (LOTTE ADVANCED MATERIALS CO., LTD.) 07 March 2018 (2018-03-07) See claims 1-10. | 1-14 |

☐ Further documents are listed in the continuation of Box C.
☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 November 2024** | **08 November 2024** |

Name and mailing address of the ISA/KR

**Korean Intellectual Property Office**
**Government Complex-Daejeon Building 4, 189 Cheongsa-ro, Seo-gu, Daejeon 35208**

Facsimile No. **+82-42-481-8578**

Authorized officer

Telephone No.

Form PCT/ISA/210 (second sheet) (July 2022)

**INTERNATIONAL SEARCH REPORT**
**Information on patent family members**

International application No.
**PCT/KR2024/011519**

| Patent document cited in search report | Publication date (day/month/year) | Patent family member(s) | Publication date (day/month/year) |
|---|---|---|---|
| KR 10-2022-0106409 A | 29 July 2022 | CN 115119513 A | 27 September 2022 |
| | | EP 4074779 A1 | 19 October 2022 |
| | | EP 4074779 A4 | 02 August 2023 |
| | | JP 2023-514020 A | 05 April 2023 |
| | | JP 7342276 B2 | 11 September 2023 |
| | | KR 10-2707170 B1 | 20 September 2024 |
| | | TW 202231776 A | 16 August 2022 |
| | | US 2023-0235161 A1 | 27 July 2023 |
| | | WO 2022-158720 A1 | 28 July 2022 |
| KR 10-2022-0020770 A | 21 February 2022 | None | |
| KR 10-2019-0073323 A | 26 June 2019 | EP 2865714 A1 | 29 April 2015 |
| | | EP 2865714 B1 | 24 October 2018 |
| | | KR 10-1993516 B1 | 26 June 2019 |
| | | KR 10-2015-0047991 A | 06 May 2015 |
| | | US 2015-0119489 A1 | 30 April 2015 |
| | | US 9416266 B2 | 16 August 2016 |
| KR 10-2009-0073702 A | 03 July 2009 | KR 10-0920807 B1 | 08 October 2009 |
| KR 10-2018-0023492 A | 07 March 2018 | DE 112017004273 B4 | 28 October 2021 |
| | | KR 10-1945593 B1 | 07 February 2019 |
| | | US 10822486 B2 | 03 November 2020 |
| | | US 2019-0185655 A1 | 20 June 2019 |
| | | WO 2018-038573 A1 | 01 March 2018 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230143765
- KR 20060118820 A